(19) Europäisches Patentamt
European Patent Office
Office européen des brevets

(11) EP 2 518 539 B1

(12) **EUROPEAN PATENT SPECIFICATION**

(45) Date of publication and mention of the grant of the patent:
**30.09.2020 Bulletin 2020/40**

(21) Application number: **10839046.9**

(22) Date of filing: **08.10.2010**

(51) Int Cl.:
***G02B 5/26*** *(2006.01)* ***G02B 5/30*** *(2006.01)*

(86) International application number:
**PCT/JP2010/067765**

(87) International publication number:
**WO 2011/077809 (30.06.2011 Gazette 2011/26)**

(54) **INFRARED-RAY REFLECTIVE MEMBER**

INFRAROTSTRAHLEN-REFLEKTIERENDES ELEMENT

ELÉMENT RÉFLÉCHISSANT LES RAYONS INFRAROUGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2009 JP 2009295768**

(43) Date of publication of application:
**31.10.2012 Bulletin 2012/44**

(60) Divisional application:
**18151562.8 / 3 351 980**

(73) Proprietor: **Dai Nippon Printing Co., Ltd.**
**Tokyo 162-8001 (JP)**

(72) Inventors:
- **HAMADA, Satoru**
  **Tokyo 162-8001 (JP)**
- **TAKESHIGE, Shoji**
  **Tokyo 162-8001 (JP)**
- **KASHIMA, Keiji**
  **Tokyo 162-8001 (JP)**
- **KURODA, Takashi**
  **Tokyo 162-8001 (JP)**

(74) Representative: **Beck Greener LLP**
**Fulwood House**
**12 Fulwood Place**
**London WC1V 6HR (GB)**

(56) References cited:
**JP-A- 4 281 403**
**JP-A- 4 281 403**
**JP-A- 59 109 505**
**JP-A- 2000 028 827**
**JP-A- 2009 514 022**
**US-A1- 2007 109 673**
**US-B1- 6 800 337**

- **Anonynous: "translation of JPH04281403A", , 2 March 2017 (2017-03-02), XP055491796, Retrieved from the Internet: URL:NA**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 518 539 B1

## Description

### Technical Field

The present invention relates to an infrared-ray reflective member which efficiently reflects infrared rays (heat rays) contained in sunlight while transmitting visible light rays.

### Background Art

A selective reflective member using a cholesteric liquid crystal is known as a member capable of selectively reflecting a desired wavelength in a wavelength range of visible light rays to infrared rays. These selective reflective members are expected for utilization as a heat ray reflective film and a permeable heat insulating film for transmitting visible light rays and reflecting only heat rays by reason of being capable of selectively reflecting only desired light (electromagnetic wave) .

For example, the following literatures are known with regard to an infrared-ray reflective member for reflecting infrared rays by using a cholesteric liquid crystal. A laminated body composed of a transparent substrate with thin-film coating for reflecting near infrared rays in a wide band and a filter made of a cholesteric liquid crystal having acute wavelength selective reflectivity in a near infrared-ray portion is disclosed in Patent Literature 1. This technique is intended for reflecting near infrared rays with high efficiency without deteriorating transmittance of visible light. Also, heat insulating coating including one kind or more of a cholesteric layer for reflecting at least 40% of incident radiation in an infrared wavelength range is disclosed in Patent Literature 2. This technique is intended for obtaining a desired heat insulating effect by using a cholesteric layer.

In addition, a polymer liquid crystal layer structure provided with a polymer liquid crystal layer with optical reflectance improved by a specific method and a support for supporting this polymer liquid crystal layer, in which the reflectance is 35% or more against light with a specific wavelength, is disclosed in Patent Literature 3. This technique is used mainly for a liquid crystal display (LCD), and improves the reflectance of the polymer liquid crystal layer by using a fluorine-based nonionic surface active agent. Also, a double coated adhesive film for shielding near infrared rays provided with a near infrared-ray shielding layer having a selective reflection layer A composed of a solidified polymer layer having a cholesteric liquid crystal structure, which transmits visible light and selectively reflects near infrared rays in a specific wavelength range, is disclosed in Patent Literature 4. This technique is used mainly for a plasma display panel (PDP), and restrains an electromagnetic wave by the PDP from influencing the periphery by the double coated adhesive film for shielding near infrared rays.

### Citation List

#### Patent Literature

Patent Literature 1: Japanese Patent Application Laid-Open No. H04-281403
Patent Literature 2: Japanese PCT National Publication No. 2001-519317
Patent Literature 3: Japanese Patent No. 3,419,568
Patent Literature 4: Japanese Patent Application Laid-Open No. 2008-209574

### Summary of Invention

#### Technical Problem

Among various infrared rays, infrared rays contained in sunlight reaching earth occupy approximately a half of the whole radiant energy of sunlight, so that heat insulating effect obtained by reflecting the infrared rays is high. However, conventional infrared-ray reflective members have not been favorable in reflection efficiency of infrared rays contained in sunlight.

The present invention has been made in view of the above-mentioned actual circumstances, and the main object thereof is to provide an infrared-ray reflective member which efficiently reflects infrared rays (heat rays) contained in sunlight while transmitting visible light rays. The infrared rays in the present invention signify light (electromagnetic wave) with a wavelength of 800 nm or more.

Solution to Problem

In order to solve the above-mentioned problems, the present invention provides an infrared-ray reflective member for transmitting a visible light ray and reflecting an infrared ray having a particular wavelength, comprising an infrared-ray reflective layer having a selective reflection layer for reflecting an infrared ray of a right-circularly polarized light component or a left-circularly polarized light component and for transmitting the other component, and in that the above-mentioned infrared-ray reflective layer has a first reflection band corresponding to a first radiant energy band containing a peak located closest to the short-wavelength side of the infrared range of the spectrum of sunlight on earth, when the maximum reflectance in the above-mentioned first reflection band is determined at $R_1$ and a wavelength in the short-wavelength side for allowing half-value reflectance of the above-mentioned $R_1$ is determined at $\lambda_1$, the above-mentioned $\lambda_1$ is 900 nm to 1010 nm and when a wavelength in a long-wavelength side for allowing half-value reflectance of the $R_1$ in the first reflection band is determined at $\lambda_2$, the $\lambda_2$ is 1090 nm to 1210 nm.

The present invention allows infrared rays contained in the first radiant energy band to be efficiently reflected for the reason that $\lambda_1$ is within the above-mentioned range. Also, an infrared-ray reflective member which does not hinder transmission of visible light rays is allowed for the reason that $\lambda_1$ is 900 nm or more. Thus, the infrared-ray reflective member of the present invention is useful as a member for thermally insulating infrared rays contained in sunlight.

In the above-mentioned present invention, the above-mentioned $\lambda_1$ is preferably 910 nm to 970 nm. The reason therefor is to allow infrared rays contained in sunlight to be reflected more efficiently.

In the above-mentioned present invention, the above-mentioned infrared-ray reflective layer is preferably a right-circularly-polarized-light selective reflective layer A corresponding to the above-mentioned first reflection band. The reason therefor is that kinds of materials usable for the right-circularly-polarized-light selective reflective layer are larger in number than those of materials usable for the left-circularly-polarized-light selective reflective layer.

In the above-mentioned present invention, the above-mentioned infrared-ray reflective layer preferably has a right-circularly-polarized-light selective reflective layer A and a left-circularly-polarized-light selective reflective layer B corresponding to the above-mentioned first reflection band. The reason therefor is that the disposition of both the right-circularly-polarized-light selective reflective layer and the left-circularly-polarized-light selective reflective layer allows reflectance to be improved.

In the above-mentioned present invention, the above-mentioned left-circularly-polarized-light selective reflective layer B is preferably composed of a right-circularly-polarized-light selective reflective layer C for reflecting the infrared ray of the above-mentioned right-circularly polarized light component and a $\lambda/2$ plate formed on a light-receiving side surface of the above-mentioned right-circularly-polarized-light selective reflective layer C. The reason therefor is that the combination of the right-circularly-polarized-light selective reflective layer and the $\lambda/2$ plate allows the same reflection properties as the left-circularly-polarized-light selective reflective layer to be performed. In addition, there is an advantage that kinds of materials usable for the right-circularly-polarized-light selective reflective layer are larger in number than those of materials usable for the left-circularly-polarized-light selective reflective layer.

In the above-mentioned present invention, it is preferable that the above-mentioned infrared-ray reflective layer has a second reflection band corresponding to a second radiant energy band containing a peak located second closest to the short-wavelength side of the infrared range of the spectrum of sunlight on earth, and when the maximum reflectance in the above-mentioned second reflection band is determined at $R_2$ and a wavelength in the long-wavelength side for allowing half-value reflectance of the above-mentioned $R_2$ is determined at $\lambda_4$, the above-mentioned $\lambda_4$ is 1250 nm to 1450 nm. The reason therefor is to allow infrared rays contained in sunlight to be reflected more efficiently for the reason that the infrared-ray reflective layer has both the first reflection band and the second reflection band.

In the above-mentioned present invention, the above-mentioned infrared-ray reflective layer preferably has a right-circularly-polarized-light selective reflective layer $A_1$ corresponding to the above-mentioned first reflection band and a right-circularly-polarized-light selective reflective layer $A_2$ corresponding to the above-mentioned second reflection band. The reason therefor is that kinds of materials usable for the right-circularly-polarized-light selective reflective layer are larger in number than those of materials usable for the left-circularly-polarized-light selective reflective layer.

In the above-mentioned present invention, the above-mentioned infrared-ray reflective layer preferably has a right-circularly-polarized-light selective reflective layer $A_1$ and a left-circularly-polarized-light selective reflective layer $B_1$ corresponding to the above-mentioned first reflection band, and a right-circularly-polarized-light selective reflective layer $A_2$ and a left-circularly-polarized-light selective reflective layer $B_2$ corresponding to the above-mentioned second reflection band. The reason therefor is that the disposition of both the right-circularly-polarized-light selective reflective layer and the left-circularly-polarized-light selective reflective layer allows reflectance to be improved.

In the above-mentioned present invention, at least one of the above-mentioned left-circularly-polarized-light selective reflective layer $B_1$ and the above-mentioned left-circularly-polarized-light selective reflective layer $B_2$ is preferably composed of a right-circularly-polarized-light selective reflective layer C for reflecting the infrared ray of the above-mentioned right-circularly polarized light component and a $\lambda/2$ plate formed on a light-receiving side surface of the above-mentioned right-circularly-polarized-light selective reflective layer C. The reason therefor is that the combination of the

right-circularly-polarized-light selective reflective layer and the λ/2 plate allows the same reflection properties as the left-circularly-polarized-light selective reflective layer to be performed. In addition, there is an advantage that kinds of materials usable for the right-circularly-polarized-light selective reflective layer are larger in number than those of materials usable for the left-circularly-polarized-light selective reflective layer.

In the above-mentioned present invention, the above-mentioned selective reflection layer preferably contains a rodlike compound with a cholesteric structure formed. The reason therefor is to allow a desired selective reflectivity.

In the above-mentioned present invention, it is preferable that the above-mentioned rodlike compound has nematic liquid crystallinity and the above-mentioned selective reflection layer contains a fixed chiral nematic liquid crystal. The reason therefor is to allow a desired selective reflectivity.

## Advantageous Effects of Invention

The infrared-ray reflective member of the present invention brings the effect of allowing infrared rays (heat rays) contained in sunlight to be efficiently reflected while transmitting visible light rays.

## Brief Description of Drawings

FIG. 1 is a schematic cross-sectional view showing an example of an infrared-ray reflective member of the present invention.

FIG. 2 is a graph exemplifying a relation between wavelength and reflectance in an infrared-ray reflective layer.

FIGS. 3A and 3B are each a schematic cross-sectional view exemplifying a layer composition of an infrared-ray reflective layer in the present invention.

FIGS. 4A and 4B are each a schematic cross-sectional view exemplifying a layer composition of an infrared-ray reflective layer in the present invention.

FIG. 5 is a graph exemplifying a relation between wavelength and reflectance in a first reflective band.

FIG. 6 is a graph exemplifying a relation between wavelength and reflectance in a first reflective band and a second reflective band.

FIGS. 7A and 7B are each a schematic cross-sectional view exemplifying a layer composition of an infrared-ray reflective layer in the present invention.

FIGS. 8A to 8D are each a schematic cross-sectional view exemplifying a layer composition of an infrared-ray reflective layer in the present invention.

FIG. 9 is a graph exemplifying a relation between wavelength and reflectance in a first reflective band and a second reflective band.

FIG. 10 is a graph exemplifying a relation between wavelength and reflectance in a first reflective band, a second reflective band and a third reflective band.

FIG. 11 is a graph showing a relation between wavelength and reflectance in an infrared-ray reflective member obtained in Example 1.

FIG. 12 is a graph showing a relation between wavelength and reflectance in an infrared-ray reflective member obtained in Example 2.

FIG. 13 is a graph showing a relation between wavelength and reflectance in an infrared-ray reflective member obtained in Example 3.

FIG. 14 is a graph showing a relation between wavelength and reflectance in an infrared-ray reflective member obtained in Example 4.

## Description of Embodiments

An infrared-ray reflective member of the present invention is hereinafter described in detail.

The infrared-ray reflective member of the present invention may be divided roughly into three embodiments in accordance with a reflection band of an infrared-ray reflective layer. That is to say, the infrared-ray reflective member may be divided roughly into an embodiment such that an infrared-ray reflective layer has at least a first reflection band (a first embodiment), an embodiment such that an infrared-ray reflective layer has at least a second reflection band (a second embodiment), and an embodiment such that an infrared-ray reflective layer has at least a third reflection band (a third embodiment). The infrared-ray reflective member of the present invention is hereinafter described while divided into the first to third embodiments.

1. First Embodiment

An infrared-ray reflective member of the first embodiment is an infrared-ray reflective member for transmitting visible light rays and reflecting infrared rays having particular wavelengths, comprising an infrared-ray reflective layer having a selective reflection layer for reflecting infrared rays of a right-circularly polarized light component or a left-circularly polarized light component, and in that the above-mentioned infrared-ray reflective layer has a first reflection band corresponding to a first radiant energy band containing a peak located closest to the short-wavelength side of the infrared range of the spectrum of sunlight on earth, and when the maximum reflectance in the above-mentioned first reflection band is determined at $R_1$ and a wavelength in the short-wavelength side for allowing half-value reflectance of the above-mentioned $R_1$ is determined at $\lambda_1$, the above-mentioned $\lambda_1$ is 900 nm to 1010 nm.

Such an infrared-ray reflective member of the first embodiment is described while referring to drawings. FIG. 1 is a schematic cross-sectional view showing an example of an infrared-ray reflective member of the first embodiment. An infrared-ray reflective member 10 shown in FIG. 1 has a transparent substrate 1, and an infrared-ray reflective layer 3 formed on the transparent substrate 1, having a selective reflection layer 2 for reflecting infrared rays of a right-circularly polarized light component or a left-circularly polarized light component. FIG. 1 is showing the case where the infrared-ray reflective layer 3 is the single selective reflection layer 2. The infrared-ray reflective layer 3 may have the plural selective reflection layers 2 as described later.

FIG. 2 is a graph exemplifying a relation between wavelength and reflectance in an infrared-ray reflective layer. "The spectrum of sunlight on earth" shown in FIG. 2 signifies distribution of radiant energy ($Wm^{-2}/nm$) of average sunlight on earth in the Temperate Zone (AM1.5G). In the spectrum of sunlight (AM0) on the earth orbit, the distribution of radiant energy becomes gradual and radiant energy becomes attenuated due to reflection, scattering and absorption in the atmosphere. As a result, the spectrum of sunlight as shown in FIG. 2 is obtained on earth. In the present specification, "the spectrum of sunlight on earth" is occasionally referred to simply as "the spectrum of sunlight".

Also, the infrared-ray reflective layer in FIG. 2 has a first reflection band 31 corresponding to a first radiant energy band 21 containing a peak located closest to the short-wavelength side of the infrared range of the spectrum of sunlight on earth. In the first embodiment, the infrared range signifies a range with a wavelength of 800 nm or more. The first radiant energy band 21 ordinarily has a peak in the vicinity of a wavelength of 1010 nm and a wavelength range thereof is 950 nm to 1150 nm. On the other hand, the first reflection band 31 is such that a wavelength for allowing the maximum reflectance $R_1$ is within a wavelength range of the first radiant energy band 21, and may be formed out of a single selective reflection layer or plural selective reflection layers. In the case where a wavelength on the short-wavelength side for allowing half-value reflectance ($1/2R_1$) of the maximum reflectance $R_1$ is determined at $\lambda_1$, the first embodiment is greatly characterized in that $\lambda_1$ is within a range of 900 nm to 1010 nm.

The first embodiment allows infrared rays contained in the first radiant energy band to be efficiently reflected for the reason that $\lambda_1$ is within the above-mentioned range. Also, an infrared-ray reflective member which does not hinder transmission of visible light rays is allowed for the reason that $\lambda_1$ is 900 nm or more. Thus, the infrared-ray reflective member of the first embodiment is useful as a member for thermally insulating infrared rays contained in sunlight. In particular, the energy density of infrared rays in the first radiant energy band is so large as compared with the energy density of infrared rays in other radiant energy bands that the reflection of the infrared rays allows reflection efficiency to be greatly improved.

The infrared-ray reflective member of the first embodiment is hereinafter described in each constitution.

(1) Infrared-ray reflective layer

First, the infrared-ray reflective layer in the first embodiment is described. The infrared-ray reflective layer is a layer having one layer or plural layers of a selective reflection layer for reflecting infrared rays of a right-circularly polarized light component or a left-circularly polarized light component. The selective reflection layer composing the infrared-ray reflective layer has the function of selectively reflecting a right-circularly polarized light component or a left-circularly polarized light component of incident light (electromagnetic wave) through one plane of the layer and transmitting the other component. A cholesteric liquid crystal material is known as a material capable of reflecting only a specific circularly polarized light component in this manner. The cholesteric liquid crystal material has the property of selectively reflecting one polarized light of two right-handed twisting and left-handed twisting circularly polarized lights of incident light (electromagnetic wave) along the helical axis in a planar array of the liquid crystal. This property is known as circular dichroism, and when a twisting direction in a helical structure of a cholesteric liquid crystal molecule is properly selected, circularly polarized light having the same rotational direction as the twisting direction is selectively reflected.

The maximum optical rotation polarized light scattering in this case occurs at selective wavelength $\lambda$ in the following expression (1):

$$\lambda = n_{av} \cdot p \quad (1).$$

In the expression (1), $n_{av}$ is an average refractive index in a plane orthogonal to the helical axis and "p" is a helical pitch in a helical structure of the liquid crystal molecule.

The band width $\Delta\lambda$ of a reflection wavelength is represented by the following expression (2):

$$\Delta\lambda = \Delta n \cdot p \quad (2)$$

In the expression (2), $\Delta n$ is a birefringence of the cholesteric liquid crystal material. That is to say, a selective reflection layer composed of the cholesteric liquid crystal material reflects one of right-handed twisting and left-handed twisting circularly polarized light components of light (electromagnetic wave) in a range of the wavelength band width $\Delta\lambda$ centering around the selective wavelength $\lambda$, and transmits the other circularly polarized light component and unpolarized light (electromagnetic wave) in other wavelength ranges.

Accordingly, proper selection of $n_{av}$ and "p" of the cholesteric liquid crystal material allows desired infrared rays to be reflected.

(i) Property and constitution of infrared-ray reflective layer

Next, property and constitution of the infrared-ray reflective layer are described. The infrared-ray reflective layer in the first embodiment has at least the first reflection band 31, as shown in the above-mentioned FIG. 2. In addition, in the case where the maximum reflectance in the first reflection band 31 is determined at $R_1$ and a wavelength in the short-wavelength side for allowing half-value reflectance of $R_1$ is determined at $\lambda_1$, the first embodiment is greatly characterized in that $\lambda_1$ is within a range of 900 nm to 1010 nm.

Here, the reason why the upper limit of $\lambda_1$ is determined at 1010 nm is as follows. That is to say, the peak wavelength of the first radiant energy band of the spectrum of sunlight is in the vicinity of 1010 nm, and the energy density of infrared rays increases in the proximity of the peak wavelength. Accordingly, in order to efficiently reflect infrared rays in the proximity of the peak wavelength of the first radiant energy band, $\lambda_1$ for allowing half-value of the maximum reflectance $R_1$ is preferably at least the peak wavelength or less of the first radiant energy band. Thus, the upper limit of $\lambda_1$ is determined at 1010 nm.

In addition, the upper limit of $\lambda_1$ is preferably 970 nm, more preferably 960 nm, and far more preferably 950 nm. The reason why the upper limit of $\lambda_1$ is far more preferably 950 nm is as follows. That is to say, in the case where the peak intensity in the first radiant energy band of the spectrum of sunlight is determined at $R_{S1}$ and the spectrum wavelength of sunlight on the short-wavelength side for allowing half-value intensity of the $R_{S1}$ is determined at $\lambda_{S1}$, $\lambda_{S1}$ is in the vicinity of 950 nm. Thus, the first reflection band may nearly cover a part with a high energy density of infrared rays in the first radiant energy band by determining the value of $\lambda_1$ so as to satisfy a relation of $\lambda_1 \leqq \lambda_{S1}$. Thus, infrared rays may be reflected more effectively.

Meanwhile, the reason why the lower limit of $\lambda_1$ is determined at 900 nm is as follows. That is to say, $\lambda_1$ is a wavelength of half-value reflectance of $R_1$, so that the first reflection band has a foot reflective region on the shorter-wavelength side than $\lambda_1$. The wavelength range of this foot reflective region is assumed to be approximately 100 nm at the maximum in the current material system. Thus, when the lower limit of $\lambda_1$ is less than 900 nm, the shortest wavelength in the foot reflective region becomes less than 800 nm and there is a possibility of reaching a visible light range. In that case, the infrared-ray reflective member becomes so reddish that there is a possibility that visibility through the infrared-ray reflective member deteriorates. Thus, the lower limit of $\lambda_1$ is determined at 900 nm. In addition, the lower limit of $\lambda_1$ is preferably 910 nm, and more preferably 920 nm.

Also, as shown in the above-mentioned FIG. 2, the maximum reflectance in the first reflection band 31 is determined at $R_1$ and a wavelength on the long-wavelength side for allowing half-value reflectance ($1/2R_1$) of $R_1$ is determined at $\lambda_2$. The wavelength range of $\lambda_2$ is within a range of 1090 nm to 1210 nm. The reason why the lower limit of $\lambda_2$ is more than 1090 nm is as follows. That is to say, in the case where the peak intensity in the first radiant energy band of the spectrum of sunlight is determined at $R_{S1}$ and the spectrum wavelength of sunlight on the long-wavelength side for allowing half-value intensity of the $R_{S1}$ is determined at $\lambda_{S2}$, $\lambda_{S2}$ is ordinarily in the vicinity of 1090 nm. Thus, the value of $\lambda_2$ is preferably determined so as to satisfy a relation of $\lambda_{S2} \leqq \lambda_2$. On the other hand, the upper limit of $\lambda_2$ is preferably 1150 nm.

Also, the position of the peak wavelength of the first reflection band is not particularly limited and is preferably in the proximity of the peak wavelength of the first radiant energy band, being preferably within a range of 900 nm to 1150 nm, for example, and within a range of 950 nm to 1100 nm, above all. Also, the interval ($\lambda_2$ - $\lambda_1$) between $\lambda_1$ and $\lambda_2$ is preferably within a range of 50 nm to 200 nm, for example, and within a range of 100 nm to 200 nm, above all.

Next, the layer composition of the infrared-ray reflective layer for allowing the first reflection band is described. The layer composition of the infrared-ray reflective layer is not particularly limited if it allows a desired first reflection band. Examples of the layer composition of such an infrared-ray reflective layer include a layer composition such that the infrared-ray reflective layer 3 is a right-circularly-polarized-light selective reflective layer A corresponding to the first reflection band (FIG. 3A), and a layer composition such that the infrared-ray reflective layer 3 is a left-circularly-polarized-light selective reflective layer B corresponding to the first reflection band (FIG. 3B), such as shown in FIGS. 3A and 3B. The left-circularly-polarized-light selective reflective layer B may be composed of a right-circularly-polarized-light selective reflective layer C and a λ/2 plate, as described later. Also, the right-circularly polarized light component of incident infrared rays 11 is reflected by the right-circularly-polarized-light selective reflective layer A in FIG. 3A, and the left-circularly polarized light component of incident infrared rays 11 is reflected by the left-circularly-polarized-light selective reflective layer B in FIG. 3B. Thus, even though the infrared-ray reflective layer is composed of one selective reflection layer, the interval ($\lambda_2$ - $\lambda_1$) between $\lambda_1$ and $\lambda_2$ is approximately 200 nm at the maximum, so that sufficient reflection may be performed in the first radiant energy band. Thus, the first reflection band 31 as shown in the above-mentioned FIG. 2 may be obtained. Also, in the case where the infrared-ray reflective layer 3 is the right-circularly-polarized-light selective reflective layer A or the left-circularly-polarized-light selective reflective layer B, the maximum reflectance thereof is ordinarily within a range of 30% to 50%.

Also, other examples of the layer composition of the above-mentioned infrared-ray reflective layer include a layer composition such that the infrared-ray reflective layer 3 has the right-circularly-polarized-light selective reflective layer A and the left-circularly-polarized-light selective reflective layer B corresponding to the first reflection band, as shown in FIG. 4A. The right-circularly polarized light component of the incident infrared rays 11 is first reflected by the right-circularly-polarized-light selective reflective layer A in FIG. 4A, and the left-circularly polarized light component of the infrared rays 11 transmitted through the right-circularly-polarized-light selective reflective layer A is reflected by the left-circularly-polarized-light selective reflective layer B. As a result, as shown in FIG. 5, the reflectance of the first reflection band 31 increases. Thus, in the case where the infrared-ray reflective layer 3 has the right-circularly-polarized-light selective reflective layer A and the left-circularly-polarized-light selective reflective layer B corresponding to the first reflection band, the maximum reflectance thereof is ordinarily within a range of 60% to 100%.

A positional relation between the right-circularly-polarized-light selective reflective layer A and the left-circularly-polarized-light selective reflective layer B is not particularly limited in FIG. 4A. Also, as shown in FIG. 4B, the left-circularly-polarized-light selective reflective layer B is preferably composed of a right-circularly-polarized-light selective reflective layer C for reflecting infrared rays of the right-circularly polarized light component and a λ/2 plate formed on a light-receiving side surface of the right-circularly-polarized-light selective reflective layer C. The reason therefor is that the combination of the right-circularly-polarized-light selective reflective layer and the λ/2 plate allows the same reflection properties as the left-circularly-polarized-light selective reflective layer to be performed, and that kinds of materials usable for the right-circularly-polarized-light selective reflective layer are larger in number than those of materials usable for the left-circularly-polarized-light selective reflective layer. The right-circularly polarized light component of the incident infrared rays 11 is first reflected by the right-circularly-polarized-light selective reflective layer A in FIG. 4B, and the left-circularly polarized light component of the infrared rays 11 transmitted through the right-circularly-polarized-light selective reflective layer A is converted into a right-circularly polarized light component during transmission through the λ/2 plate D, and then the right-circularly polarized light component is reflected by the right-circularly-polarized-light selective reflective layer C. In this case, the right-circularly polarized light component reflected by the right-circularly-polarized-light selective reflective layer C is converted again into a left-circularly polarized light component during transmission through the λ/2 plate D, and is transmitted through the right-circularly-polarized-light selective reflective layer A, and then is emitted from the infrared-ray reflective layer 3. As a result, as shown in FIG. 5, the reflectance of the first reflection band 31 increases.

The infrared-ray reflective layer in the first embodiment may have a second reflection band 32 in addition to the first reflection band 31 as shown in FIG. 6. In FIG. 6, the first reflection band 31 and the second reflection band 32 are independently shown for convenience, and totaled reflectance is actually measured in a portion in which both overlap (similarly also in FIGS. 9 and 10). Also, the second reflection band 32 corresponds to a second radiant energy band 22 containing a peak located second closest to the short-wavelength side of the infrared range of the spectrum of sunlight on earth. The second radiant energy band 22 ordinarily has a peak in the vicinity of a wavelength of 1250 nm and a wavelength range thereof is 1150 nm to 1370 nm. On the other hand, the second reflection band 32 is such that a wavelength for allowing the maximum reflectance $R_2$ is within a wavelength range of the second radiant energy band 22, and may be formed out of a single selective reflection layer or plural selective reflection layers. In the first embodiment, in the case where a wavelength on the long-wavelength side for allowing half-value reflectance ($1/2R_2$) of the maximum reflectance $R_2$ is determined at $\lambda_4$, $\lambda_4$ is preferably within a range of 1250 nm to 1450 nm.

Here, the reason why the lower limit of $\lambda_4$ is determined at 1250 nm is as follows. That is to say, the peak wavelength of the second radiant energy band of the spectrum of sunlight is in the vicinity of 1250 nm, and the energy density of infrared rays increases in the proximity of the peak wavelength. Accordingly, in order to efficiently reflect infrared rays in the proximity of the peak wavelength of the second radiant energy band, $\lambda_4$ for allowing half-value of the

maximum reflectance $R_2$ is preferably at least the peak wavelength or more of the second radiant energy band. Thus, the lower limit of $\lambda_4$ is preferably 1250 nm.

In addition, the lower limit of $\lambda_4$ is preferably 1330 nm. The reason therefor is as follows. That is to say, in the case where the peak intensity in the second radiant energy band of the spectrum of sunlight is determined at $R_{S2}$ and the spectrum wavelength of sunlight on the long-wavelength side for allowing half-value intensity of the $R_{S2}$ is determined at $\lambda_{S4}$, $\lambda_{S4}$ is in the vicinity of 1330 nm. Thus, the second reflection band may nearly cover a part with a high energy density of infrared rays in the second radiant energy band by determining the value of $\lambda_4$ so as to satisfy a relation of $\lambda_{S4} \leqq \lambda_4$. Thus, infrared rays may be reflected more effectively.

Meanwhile, the reason why the upper limit of $\lambda_4$ is determined at 1450 nm is as follows. That is to say, as described in the above-mentioned FIGS.3A and 3B, in the case where the infrared-ray reflective layer is composed of one selective reflection layer, the interval ($\lambda_2$ - $\lambda_1$) between $\lambda_1$ and $\lambda_2$ is approximately 200 nm at the maximum. This is the same also in the second reflection band 32 shown in FIG. 6 and the interval ($\lambda_4$ - $\lambda_3$) between $\lambda_3$ and $\lambda_4$ is approximately 200 nm at the maximum. $\lambda_3$ is a wavelength on the short-wavelength side for allowing half-value reflectance ($1/2R_2$) of $R_2$. On the other hand, in the case of considering that the peak of the second radiant energy band of the spectrum of sunlight is in the vicinity of 1250 nm, when $\lambda_4$ is made larger than 1450 nm, $\lambda_3$ becomes larger than 1250 nm and the second reflection band may hardly cover a part with a high energy density of infrared rays in the second radiant energy band. Thus, the upper limit of $\lambda_4$ is preferably 1450 nm. Also, in order that the second reflection band may cover the second radiant energy band more efficiently, the upper limit of $\lambda_4$ is more preferably 1400 nm.

Also, the wavelength range of $\lambda_3$ is not particularly limited and is, for example, preferably within a range of 1050 nm to 1250 nm, and more preferably within a range of 1050 nm to 1200 nm. Also, in the case where the peak intensity in the second radiant energy band of the spectrum of sunlight is determined at $R_{S2}$ and the spectrum wavelength of sunlight on the short-wavelength side for allowing half-value intensity of the $R_{S2}$ is determined at $\lambda_{S3}$, $\lambda_{S3}$ is ordinarily in the vicinity of 1150 nm. Thus, the value of $\lambda_3$ is preferably determined so as to satisfy a relation of $\lambda_3 \leqq \lambda_{S3}$. Thus, $\lambda_3$ is preferably within a range of 1050 nm to 1150 nm. Also, in order that the second reflection band may cover the second radiant energy band more efficiently, $\lambda_3$ is more preferably within a range of 1100 nm to 1150 nm.

Also, the position of the peak wavelength of the second reflection band is not particularly limited and is preferably in the proximity of the peak wavelength of the second radiant energy band, being preferably within a range of 1175 nm to 1325 nm, for example, and within a range of 1225 nm to 1275 nm, above all. Also, the interval ($\lambda_4$ - $\lambda_3$) between $\lambda_3$ and $\lambda_4$ is the same as the above-mentioned interval ($\lambda_2$ - $\lambda_1$) between $\lambda_1$ and $\lambda_2$.

Next, the layer composition of the infrared-ray reflective layer for allowing the first reflection band and the second reflection band is described. The layer composition of the infrared-ray reflective layer is not particularly limited if it allows desired first reflection band and second reflection band. Examples of the layer composition of such an infrared-ray reflective layer include a layer composition such that the infrared-ray reflective layer 3 has a right-circularly-polarized-light selective reflective layer $A_1$ corresponding to the first reflection band and a right-circularly-polarized-light selective reflective layer $A_2$ corresponding to the second reflection band (FIG. 7A), and a layer composition such that the infrared-ray reflective layer 3 has a left-circularly-polarized-light selective reflective layer $B_1$ corresponding to the first reflection band and a left-circularly-polarized-light selective reflective layer $B_2$ corresponding to the second reflection band (FIG. 7B), such as shown in FIGS. 7A and 7B. At least one of the left-circularly-polarized-light selective reflective layer $B_1$ and the left-circularly-polarized-light selective reflective layer $B_2$ may be composed of the right-circularly-polarized-light selective reflective layer C and a $\lambda/2$ plate.

Also, other examples of the layer composition of the above-mentioned infrared-ray reflective layer include a layer composition such that the infrared-ray reflective layer has the right-circularly-polarized-light selective reflective layer $A_1$ and the left-circularly-polarized-light selective reflective layer $B_1$ corresponding to the first reflection band, and the right-circularly-polarized-light selective reflective layer $A_2$ and the left-circularly-polarized-light selective reflective layer $B_2$ corresponding to the second reflection band. Examples of such an infrared-ray reflective layer include the infrared-ray reflective layer 3 having the right-circularly-polarized-light selective reflective layer $A_1$, the right-circularly-polarized-light selective reflective layer $A_2$, the left-circularly-polarized-light selective reflective layer $B_1$, and the left-circularly-polarized-light selective reflective layer $B_2$ from the light-receiving side in this order, as shown in FIG. 8A. Such an infrared-ray reflective layer has the right-circularly-polarized-light selective reflective layer $A_1$ and the left-circularly-polarized-light selective reflective layer $B_1$ corresponding to the first reflection band, and the right-circularly-polarized-light selective reflective layer $A_2$ and the left-circularly-polarized-light selective reflective layer $B_2$ corresponding to the second reflection band, so that the reflectance of the first reflection band 31 and the second reflection band 32 increases as shown in FIG. 9.

A positional relation among the right-circularly-polarized-light selective reflective layer $A_1$, the right-circularly-polarized-light selective reflective layer $A_2$, the left-circularly-polarized-light selective reflective layer $B_1$, and the left-circularly-polarized-light selective reflective layer $B_2$ is not particularly limited in FIG. 8A. Also, as shown in FIGS. 8B to 8D, at least one of the left-circularly-polarized-light selective reflective layer $B_1$ and the left-circularly-polarized-light selective reflective layer $B_2$ is preferably composed of the right-circularly-polarized-light selective reflective layer C ($C_1$,

$C_2$) for reflecting infrared rays of the right-circularly polarized light component and the λ/2 plate D ($D_1$, $D_2$) formed on a light-receiving side surface of the right-circularly-polarized-light selective reflective layer C. The reason therefor is that the combination of the right-circularly-polarized-light selective reflective layer and the λ/2 plate allows the same reflection properties as the left-circularly-polarized-light selective reflective layer to be performed. In addition, there is an advantage that kinds of materials usable for the right-circularly-polarized-light selective reflective layer are larger in number than those of materials usable for the left-circularly-polarized-light selective reflective layer.

The infrared-ray reflective layer in the first embodiment may have a third reflection band 33 in addition to the first reflection band 31 as shown in FIG. 10. The third reflection band 33 corresponds to a third radiant energy band 23 containing a peak located third closest to the short-wavelength side of the infrared range of the spectrum of sunlight on earth. The third radiant energy band 23 ordinarily has a peak in the vicinity of a wavelength of 1550 nm and a wavelength range thereof is 1370 nm to 1900 nm. On the other hand, the third reflection band 33 is such that a wavelength for allowing the maximum reflectance $R_3$ is within a wavelength range of the third radiant energy band 23, and may be formed out of a single selective reflection layer or plural selective reflection layers.

A wavelength on the short-wavelength side for allowing half-value reflectance ($1/2R_3$) of the maximum reflectance $R_3$ is determined at $\lambda_5$ and a wavelength on the long-wavelength side is similarly determined at $\lambda_6$. $\lambda_5$ is preferably within a range of 1370 nm to 1550 nm. On the other hand, $\lambda_6$ is preferably within a range of 1550 nm to 1900 nm, and more preferably within a range of 1550 nm to 1750 nm. The position of the peak of the third reflection band is not particularly limited and is preferably in the proximity of the peak wavelength of the third radiant energy band, being preferably within a range of 1475 nm to 1625 nm, for example, and within a range of 1525 nm to 1575 nm, above all. Also, the interval ($\lambda_6$ - $\lambda_5$) between $\lambda_5$ and $\lambda_6$ is the same as the above-mentioned interval ($\lambda_2$ - $\lambda_1$) between $\lambda_1$ and $\lambda_2$.

Also, the thickness of the selective reflection layer composing the infrared-ray reflective layer is not particularly limited, being preferably within a range of 0.1 μm to 100 μm, more preferably within a range of 0.5 μm to 20 μm, and far more preferably within a range of 1 μm to 10 μm. Also, an adhesive layer may be formed between plural selective reflection layers composing the infrared-ray reflective layer. Appropriate examples of a material used for the adhesive layer include hydrophilic adhesives such as polyvinyl alcohol and polyvinyl pyrrolidone, acrylic tackiness agents, urethane tackiness agents, and epoxy tackiness agents.

(ii) Material for selective reflection layer

Next, a material for the selective reflection layer is described. As described above, the selective reflection layer is ordinarily the right-circularly-polarized-light selective reflective layer or the left-circularly-polarized-light selective reflective layer. These layers are not particularly limited if they are layers which perform circular dichroism. Examples of such a selective reflection layer include a selective reflection layer containing a rodlike compound with a cholesteric structure formed.

As the above-mentioned rodlike compound, ordinarily, a compound having refractive anisotropy and a polymerizable functional group in a molecule is used appropriately, and a compound further having a three-dimensionally cross-linkable polymerizable functional group is used more appropriately. The reason therefor is that the polymerizable functional group of the above-mentioned rodlike compound allows the above-mentioned rodlike compound to be polymerized and fixed, and thereby allows the above-mentioned rodlike compound to cause time-dependent changes with difficulty. Also, a rodlike compound having the above-mentioned polymerizable functional group and a rodlike compound not having the above-mentioned polymerizable functional group may be used by mixture. The above-mentioned "three-dimensional cross-linking" signifies that the rodlike compounds are three-dimensionally polymerized with each other and made into a state of a mesh (network) structure.

Examples of the above-mentioned polymerizable functional group include a polymerizable functional group which polymerizes by an ionizing radiation such as ultraviolet rays and electron rays, or thermal action. Typical examples of these polymerizable functional groups include a radical polymerizable functional group or a cationic polymerizable functional group. In addition, typical examples of the radical polymerizable functional group include a functional group having at least one addition-polymerizable ethylenic unsaturated double bond, and specific examples thereof include a vinyl group having or not having a substituent, and an acrylate group (a general term including an acryloyl group, a methacryloyl group, an acryloyloxy group and a methacryloyloxy group). Also, specific examples of the above-mentioned cationic polymerizable functional group include an epoxy group. Other examples of the polymerizable functional group include an isocyanate group and an unsaturated triple bond. Among these, a functional group having an ethylenic unsaturated double bond is appropriately used in view of process.

Also, the rodlike compound is preferably a liquid crystalline material exhibiting liquid crystallinity. The reason therefor is that a liquid crystalline material has high refractive anisotropy. Specific examples of the rodlike compound include compounds represented by the following chemical formulae (1) to (6).

[Chemical Formula 1]

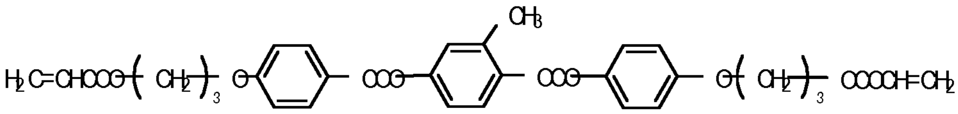
(1)

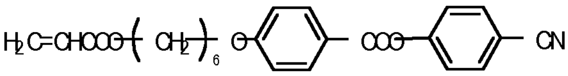
(2)

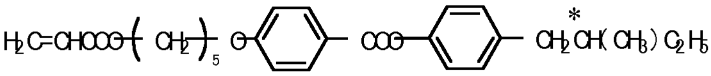
(3)

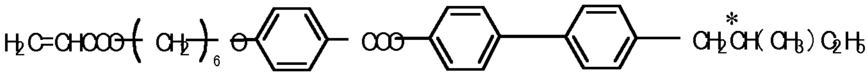
(4)

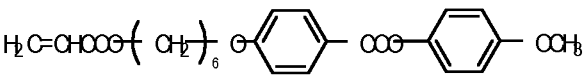
(5)

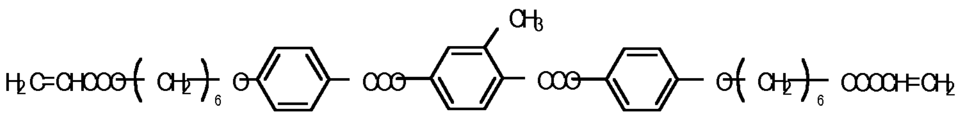
(6)

Here, the liquid crystalline material represented by the chemical formulae (1), (2), (5) and (6) may be prepared in accordance with or similarly to the method disclosed in D. J. Broer et al., Makromol. Chem. 190, 3201-3215 (1989), or D. J. Broer et al., Makromol. Chem. 190, 2255-2268 (1989). Also, the preparation of the liquid crystalline material represented by the chemical formulae (3) and (4) is disclosed in DE195, 04, 224.

Specific examples of a nematic liquid crystalline material having an acrylate group at the end also include materials represented by the following chemical formulae (7) to (17).

[Chemical Formula 2]

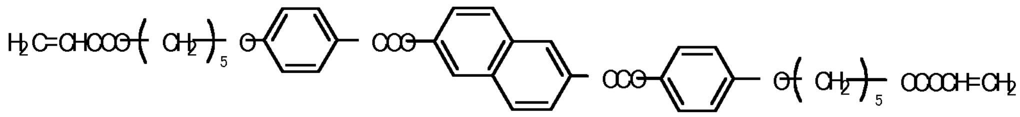 (7)

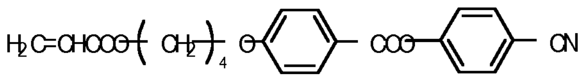 (8)

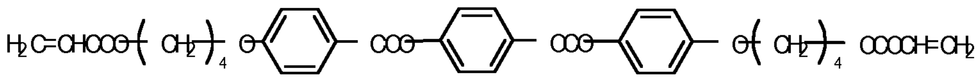 (9)

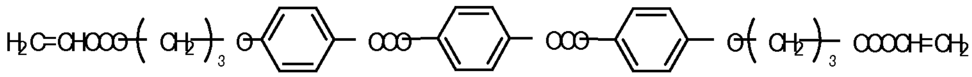 (10)

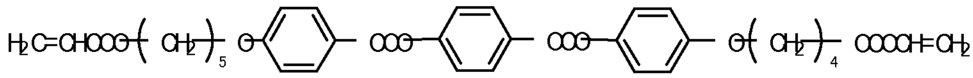 (11)

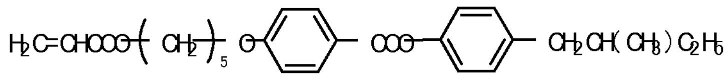 (12)

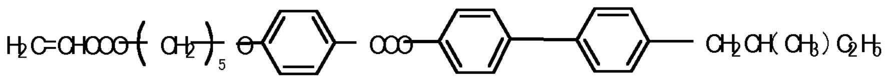 (13)

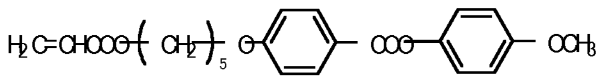 (14)

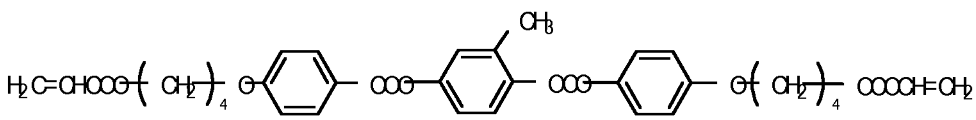 (15)

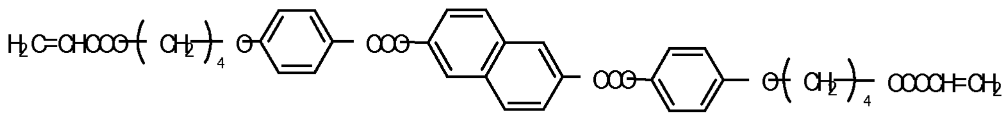 (16)

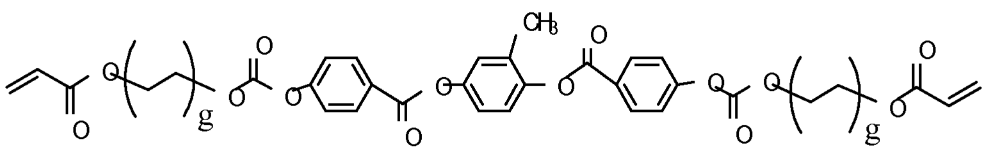 (17)

g: Intger of 2 to 5

In addition, examples of the rodlike compound include a compound represented by the following chemical formula (18) disclosed in SID 06 DIGEST 1673-1676.

[Chemical Formula 3]

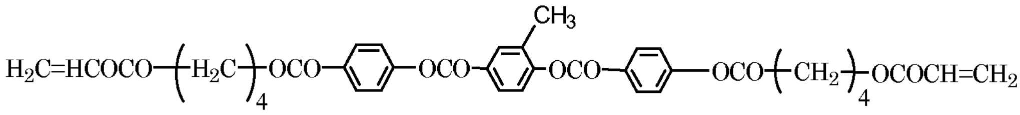

(18)

The above-mentioned rodlike compound may be used by only one kind or by mixture of plural kinds. For example, the use by mixture of a liquid crystalline material having one or more polymerizable functional group at both ends and a liquid crystalline material having one or more polymerizable functional group at an end as the above-mentioned rodlike compound is preferable in view of being capable of optionally adjusting polymerization density (crosslink density) and optical property by the adjustment of the compounding ratio of both.

In the first embodiment, any of the above-mentioned rodlike compounds may be appropriately used; above all, it is preferable to use a rodlike compound exhibiting nematic liquid crystallinity and use a material using the rodlike compound and a chiral agent together. The reason therefor is that such a material allows a chiral nematic liquid crystal to be fixed.

The above-mentioned chiral agent is not particularly limited if it allows the above-mentioned rodlike compound to be made into a predetermined cholesteric array. A low-molecular compound having axial chirality in a molecule, such as is represented by the following general formula (19), (20) or (21), is preferably used as the chiral agent.

[Chemical Formula 4]

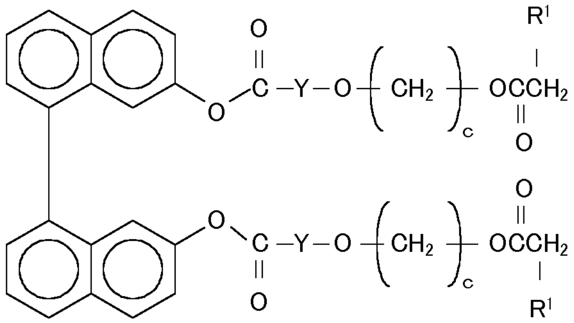

(19)

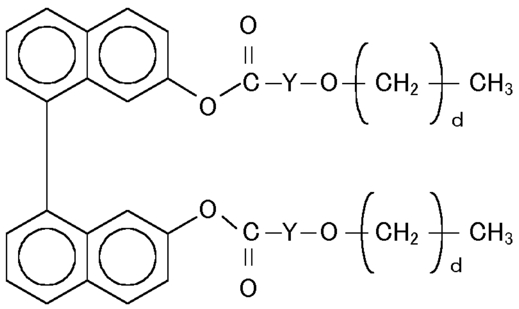

(20)

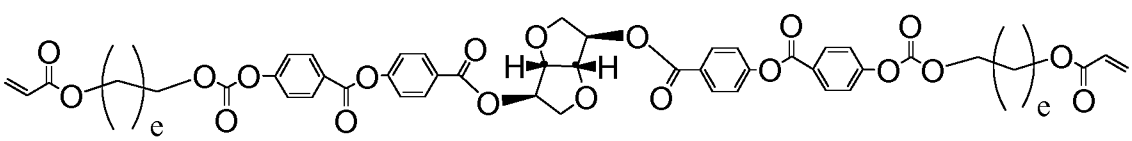

(e=integer of 2 to 5)

(21)

[Chemical Formula 5]

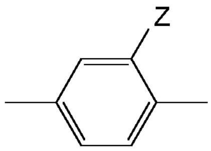

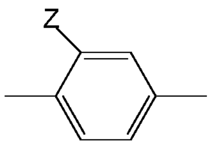

( i )

( ii )

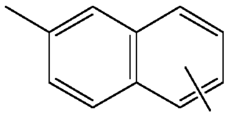

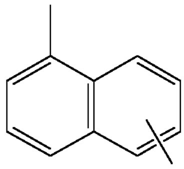

( iii )

( iv )

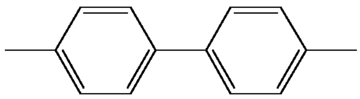

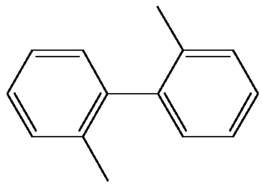

( v )

( vi )

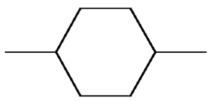

( vii )

[Chemical Formula 6]

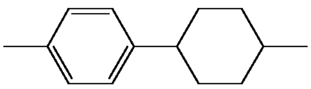

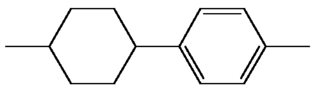

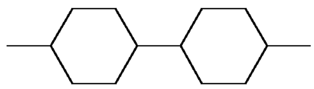

( viii )

( ix )

( x )

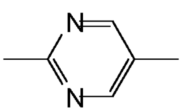

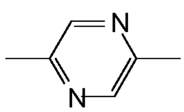

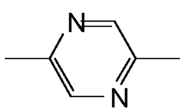

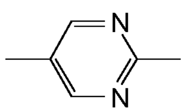

( x i )

( x ii )

( x iii )

( x iv )

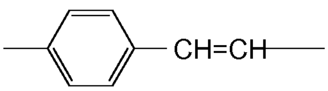

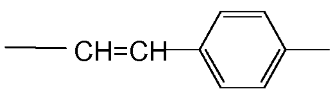

( x v )

( x vi )

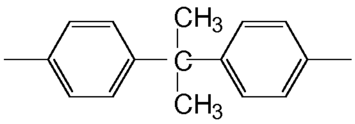

(xvii)

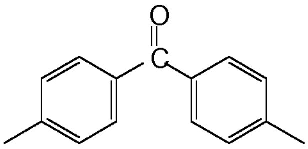

(xviii)

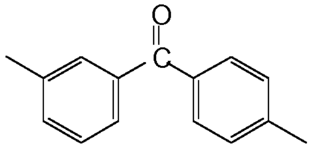

(xix)

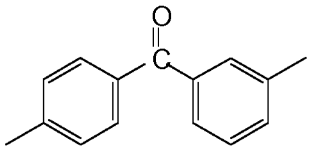

(xx)

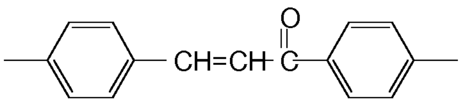

(xxi)

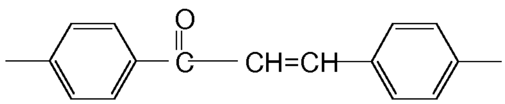

(xxii)

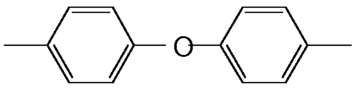

(xxiii)

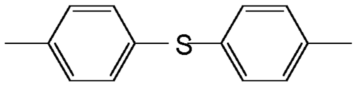

(xxiv)

In the above-mentioned general formula (19) or (20), $R^1$ denotes hydrogen or a methyl group. Y is any one of the formulae (i) to (xxiv) represented above, and above all, preferably any one of the formulae (i), (ii), (iii), (v) and (vii). Each of "c" and "d" denoting the chain length of an alkylene group may be individually an optional integer of 2 to 12, preferably 4 to 10, and more preferably 6 to 9.

A compound represented by the following chemical formula may be also used as the chiral agent.

[Chemical Formula 7]

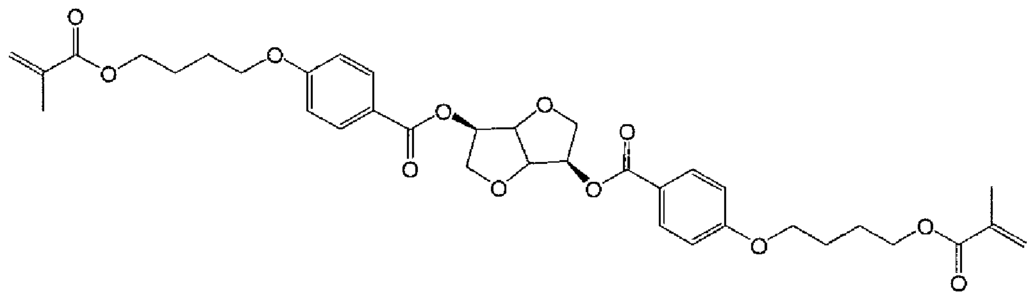

(iii) λ/2 plate

In the first embodiment, as described above, the left-circularly-polarized-light selective reflective layer is preferably composed of the right-circularly-polarized-light selective reflective layer and the λ/2 plate. The reason therefor is that the combination of the right-circularly-polarized-light selective reflective layer and the λ/2 plate allows the same reflection properties as the left-circularly-polarized-light selective reflective layer to be performed. In addition, there is an advantage that kinds of materials usable for the right-circularly-polarized-light selective reflective layer are larger in number than those of materials usable for the left-circularly-polarized-light selective reflective layer.

The above-mentioned λ/2 plate is not particularly limited if it causes a phase difference of π, and a general λ/2 plate may be used. Above all, in the first embodiment, the λ/2 plate preferably has average retardation which satisfies the following expression (3):

$$Re = \{(2n + 1) / 2 \pm 0.2\}\cdot\lambda \quad (3)$$

(in the expression, Re denotes retardation, λ denotes wavelength, and "n" denotes an interger of 1 or more). The reason therefor is that even though a general-purpose oriented film such as a polyethylene terephthalate film is used as the λ/2 plate, the λ/2 plate efficiently reflects only a desired wavelength uniformly without any spots even in a large area by satisfying specific conditions, and allows a very inexpensive infrared-ray reflective member. In particular, in the first embodiment, the above-mentioned λ is preferably a wavelength for allowing the maximum reflectance in each of the above-mentioned reflection bands.

Generally, a phase difference film used as a λ/2 plate is a polymeric film made of cellulose derivative and cycloolefin resin, and becomes prevalent industrially widely. These phase difference films are so small in retardation in-plane distribution of the films as to have uniform retardation in the whole film plane. For example, with regard to a TAC film prevalent as a phase difference film for an optical element, retardation in-plane distribution thereof is approximately 1.5 nm. On the contrary, with regard to a polymeric oriented film such that general-purpose resin is melt-extruded, thickness and birefringence are uniformized in the whole film plane with such difficulty that retardation in-plane distribution of these polymeric oriented films is approximately several tens nm. A phase difference film with 3λ/2 nm or more, such that retardation Re satifies a relation of the above-mentioned expression (3), for example, a phase difference film with Re = 1800 nm in the case where reflection wavelength λ is determined at 1200 nm is used as the phase difference film; therefore, even with regard to a polymeric oriented film with a retardation in-plane distribution of approximately 50 nm, the influence of reflectance on the maximum reflection wavelength ($\sin^2(\pi\cdot Re / \lambda)$) becomes so low as approximately 7% that high-efficiency reflection properties uniform in plane may be realized.

In the present specification, the retardation of the λ/2 plate is defined by the following expression (4):

$$Re = (n_x - n_y) \times d \quad (4)$$

with reflectance ($n_x$) in the direction (slow axis direction) in which reflectance is the largest in the λ/2 plate, reflectance ($n_y$) in the direction (fast axis direction) orthogonal to the slow axis direction, and thickness (d) of the λ/2 plate; and the average retardation is defined as such that retardations of twenty spots are measured at regular intervals (10 mm) in an optional 200-mm width of the λ/2 plate to average those values thereof. The retardation may be measured (a measured angle of 0°) by KOBRA-WX100/IR™ manufactured by Oji Scientific Instruments.

In the first embodiment, the average retardation of the λ/2 plate becomes at least 1.3 to 1.7 times larger than a desired selective reflection wavelength. For example, in the case where the wavelength λ reflected by the selective reflection layer is determined at 1200 nm, a phase difference film such that the average retardation is at least within a range of 1560 nm to 2040 nm is obtained by the above-mentioned expression (3) . The use of a phase difference film having such average retardation allows high-efficiency reflection properties uniform on the whole to be realized as the infrared-ray reflective member even though retardation in-plane distribution of the phase difference film is several tens nm. That is to say, in the first embodiment, a general-purpose polymeric oriented film, which has not been conventionally used as the phase difference film by reason of having a high retardation in-plane distribution and a high average retardation value, may be applied to the infrared-ray reflective member as the λ/2 plate so as to satisfy the above-mentioned expression (3). In the present specification, the retardation in-plane distribution is defined as a difference between the maximum value and the minimum value in measuring retardations of twenty spots at regular intervals (10 mm) in an optional 200-mm width of the film. The retardation may be measured (a measured angle of 0°) by KOBRA-WX100/IR™ manufactured by Oji Scientific Instruments.

As described above, even though a polymeric oriented film with a retardation in-plane distribution of approximately several tens nm is used as the λ/2 plate, the reason for allowing high-efficiency reflection properties uniform on the whole to be realized as the infrared-ray reflective member is described below while referring to examples. In contrast with a TAC film with a retardation in-plane distribution of approximately 1.5 nm, it is known that retardation in-plane distribution is approximately ± several tens nm in a commercially available polyethylene terephthalate (occasionally abbreviated as PET hereinafter) biaxially oriented film. For example, retardation in-plane distribution in TD direction of a biaxially oriented PET film with a thickness of 188 μm (LUMIRROR (registered trademark) U35, manufactured by Toray Industries, Inc.) is approximately ±80 nm and retardation in-plane distribution in MD direction thereof is approximately -60 nm to +80 nm. When a polymeric oriented film having such in-plane distribution is used as the λ/2 plate, the influence on the maximum reflection wavelength becomes 80 nm / 550 nm × 100 = 14.5% in the case where reflection wavelength λ is determined at a visible light range (550 nm), and the polarization state of transmitted light through the film is not the completely right-circularly polarized light but contains the shifted right-circularly polarized light component; consequently, the light $I_R$ to be reflected decreases and the reflection efficiency reduces. On the contrary, even though the retardation in-plane distribution is approximately ±80 nm as described above, the case where the reflection wavelength to be used is determined at 1200 nm brings 80 nm / 1200 nm × 100 = 6.6% to increase the light quantity reflected by the right-circularly-polarized-light selective reflective layer C. Thus, the reflective member having high-efficiency uniform reflection properties may be realized.

The retardation in-plane distribution of the λ/2 plate is preferably ±25 nm or more, and more preferably ±50 nm or more. However, the retardation in-plane distribution is preferably ±10% or less, and more preferably ±5% or less of the average retardation of the whole plane of the λ/2 plate. In the present specification, the average retardation is defined as such that retardations of twenty spots are measured at regular intervals (10 mm) in an optional 200-mm width of the film to average those values thereof.

Examples of the polymeric oriented film as described above include oriented films made of general-purpose resins: a polycarbonate resin, a poly(meth)acrylate resin such as polymethyl methacrylate, a polystyrene resin such as styrene copolymer such that polystyrene and styrene and other monomers are copolymerized, a polyacrylonitrile resin, a polyester resin such as polyethylene terephthalate, polybutylene terephthalate and polyethylene naphthalate, a polyamide resin such as nylon 6 and nylon 6.6, and a polyolefin resin such as polyethylene and polypropylene; among these, oriented films made of a polyester resin may be appropriately used from the viewpoint of easiness of availability, production costs, and value of average retardation. For example, the average retardation of a biaxially oriented film made of polyethylene terephthalate is approximately 5000 nm in a film thickness of approximately 200 μm, and 3000 nm in the thickness of approximately 120 μm.

(2) Transparent substrate

Next, a transparent substrate used for the infrared-ray reflective member of the first embodiment is described. Ordinarily, the infrared-ray reflective member of the first embodiment further has the transparent substrate for supporting the above-mentioned selective reflection layer. As described above, if the above-mentioned selective reflection layer has the λ/2 plate, by which the selective reflection layer may be supported, the transparent substrate does not need to be disposed. Also, the transparent substrate may be formed on at least one surface of the selective reflection layer.

The above-mentioned transparent substrate is not particularly limited if it may support the above-mentioned selective reflection layer. Above all, with regard to the transparent substrate, ordinarily, transmittance in a visible light range is preferably 80% or more, and more preferably 90% or more. Here, the transmittance of the transparent substrate may be measuerd by JIS K7361-1 (test method of total light transmittance of plastics and transparent materials).

Both a flexible material with flexibility and a rigid material with no flexibility may be used for the transparent substrate if they have desired transparency. Examples of the transparent substrate include a transparent substrate made of a polyester resin such as polyethylene terephthalate and polyethylene naphthalate, an olefin resin such as polyethylene and polymethylpentene, an acrylic resin, a polyurethane resin, and resins such as polyether sulfone, polycarbonate, polysulfone, polyether, polyether ketone, (meth)acrylonitrile, cycloolefin polymer and cycloolefin copolymer. Above all, a transparent substrate made of polyethylene terephthalate is preferably used. The reason therefor is that polyethylene terephthalate is high in general-purpose properties and easily available.

Also, a rigid material such as glass may be used as the transparent substrate, and a rigid material may be disposed on one surface or both surfaces of the selective reflection layer. The thickness of the transparent substrate may be properly determined in accordance with factors such as uses of the infrared-ray reflective member and materials composing the transparent substrate, and is not particularly limited.

(3) Infrared-ray reflective member

The infrared-ray reflective member of the first embodiment may efficiently reflect infrared rays (heat rays) contained in sunlight by reason of making the reflection band of the selective reflection layer correspond to the spectrum of sunlight on earth. Thus, the infrared-ray reflective member is preferably an infrared-ray reflective member for thermally insulating sunlight. Also, specific examples of uses of the infrared-ray reflective member include heat reflecting glass for vehicles, heat reflecting glass for architecture and heat reflecting film for solar batteries.

Also, a producing method for the infrared-ray reflective member in the first embodiment is not particularly limited if it is a method which allows the above-mentioned infrared-ray reflective member. Examples of the producing method for the infrared-ray reflective member include a method for applying a coating liquid for forming a selective reflection layer containing a rodlike compound and a chiral agent on a transparent substrate to perform hardening treatment such as ultraviolet-light irradiation as required. Also, in the case where the selective reflection layer has a multilayered structure, plural coating liquids for forming a selective reflection layer may be sequentially applied. In addition, the above-mentioned adhesive layer may be formed as required between layers composing the selective reflection layer.

The present invention is not limited to the above-mentioned embodiments. The above-mentioned embodiments are exemplification, and any is included in the technical scope of the claim of the present invention and offers similar operation and effect thereto.

Examples

The present invention is described more specifically while using examples hereinafter. The after-mentioned "part" signifies "part by weight" unless otherwise specified.

[Example 1]

A biaxially oriented film made of polyethylene terephthalate was prepared as a transparent substrate. Next, a cyclohexanone solution, in which 96.95 parts of a liquid crystalline monomer molecule (Paliocolor (registered trademark) LC1057 (manufactured by BASF CORPORATION)) having polymerizable acrylate at both ends and a spacer between mesogene in the central portion and the above-mentioned acrylate, and 3.05 parts of a chiral agent (Paliocolor (registered trademark) LC756 (manufactured by BASF CORPORATION)) having polymerizable acrylate at both ends were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight).

Next, the above-mentioned cyclohexanone solution was applied to the above-mentioned biaxially oriented film by a bar coater without an oriented film. Subsequently, after retaining at a temperature of 120°C for two minutes, cyclohexanone in the cyclohexanone solution was vaporized to orient the liquid crystalline monomer molecule. Then, the obtained coating film was irradiated with ultraviolet rays at 400 mJ/cm$^2$ to three-dimensionally crosslink and polymerize acrylate of the liquid crystalline monomer molecule oriented by a radical generated from the photopolymerization initiator in the coating film and acrylate of the chiral agent, and then form a selective reflection layer and obtain an infrared-ray reflective member by fixing a cholesteric structure on the biaxially oriented film. The film thickness of the selective reflection layer was 5 μm.

[Example 2]

A biaxially oriented film made of polyethylene terephthalate was prepared as a transparent substrate. Next, a cyclohexanone solution, in which 95.95 parts of a liquid crystalline monomer molecule (Paliocolor (registered trademark) LC1057 (manufactured by BASF CORPORATION)) having polymerizable acrylate at both ends and a spacer between mesogene in the central portion and the above-mentioned acrylate, and 3.05 parts of a chiral agent (Paliocolor (registered trademark) LC756 (manufactured by BASF CORPORATION)) having polymerizable acrylate at both ends were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight). This was regarded as a cyclohexanone solution 1.

Next, a cyclohexanone solution, in which 96.65 parts of a liquid crystalline monomer molecule (Paliocolor (registered trademark) LC1057 (manufactured by BASF Corporation)) having polymerizable acrylate at both ends and a spacer between mesogene in the central portion and the above-mentioned acrylate, and 4.35 parts of a chiral agent (CNL-716™ (manufactured by ADEKA CORPORATION)) having polymerizable acrylate were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight) . This was regarded as a cyclohexanone solution 2.

Next, the above-mentioned cyclohexanone solution 1 was applied to the above-mentioned biaxially oriented film by a bar coater without an oriented film. Subsequently, after retaining at a temperature of 120°C for two minutes, cyclohexanone in the cyclohexanone solution was vaporized to orient the liquid crystalline monomer molecule. Then, the obtained coating film was irradiated with ultraviolet rays at 400 mJ/cm$^2$ to three-dimensionally crosslink and polymerize acrylate of the liquid crystalline monomer molecule oriented by a radical generated from the photopolymerization initiator in the coating film and acrylate of the chiral agent, and then form a selective reflection layer by fixing a cholesteric structure on the biaxially oriented film. The film thickness of the selective reflection layer was 5 μm.

In addition, the above-mentioned cyclohexanone solution 2 was applied to the above-mentioned selective reflection layer by a bar coater. Subsequently, after retaining at a temperature of 120°C for two minutes, cyclohexanone in the cyclohexanone solution was vaporized to orient the liquid crystalline monomer molecule. Then, the obtained coating film was irradiated with ultraviolet rays at 400 mJ/cm$^2$ to three-dimensionally crosslink and polymerize acrylate of the liquid crystalline monomer molecule oriented by a radical generated from the photopolymerization initiator in the coating film and acrylate of the chiral agent, and then form a selective reflection layer and obtain an infrared-ray reflective member having the two selective reflection layers by fixing a cholesteric structure. The film thickness of the second selective reflection layer was 5 μm.

[Example 3]

A biaxially oriented film made of polyethylene terephthalate was prepared as a transparent substrate. Next, a cyclohexanone solution, in which 96.95 parts of a liquid crystalline monomer molecule (Paliocolor (registered trademark) LC1057 (manufactured by BASF Corporation)) having polymerizable acrylate at both ends and a spacer between mesogene in the central portion and the above-mentioned acrylate, and 3.05 parts of a chiral agent (Paliocolor (registered trademark) LC756 (manufactured by BASF Corporation)) having polymerizable acrylate at both ends were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight). This was regarded as a cyclohexanone solution 1.

Next, a cyclohexanone solution, in which 97.55 parts of a liquid crystalline monomer molecule (Paliocolor (registered trademark) LC1057 (manufactured by BASF Corporation)) having polymerizable acrylate at both ends and a spacer between mesogene in the central portion and the above-mentioned acrylate, and 2.45 parts of a chiral agent (Paliocolor (registered trademark) LC756 (manufactured by BASF Corporation)) having polymerizable acrylate at both ends were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight). This was regarded as a cyclohexanone solution 2.

Next, the above-mentioned cyclohexanone solution 1 was applied to the above-mentioned biaxially oriented film by a bar coater without an oriented film. Subsequently, after retaining at a temperature of 120°C for two minutes, cyclohexanone in the cyclohexanone solution was vaporized to orient the liquid crystalline monomer molecule. Then, the obtained coating film was irradiated with ultraviolet rays at 400 mJ/cm$^2$ to three-dimensionally crosslink and polymerize acrylate of the liquid crystalline monomer molecule oriented by a radical generated from the photopolymerization initiator in the coating film and acrylate of the chiral agent, and then form a selective reflection layer by fixing a cholesteric structure on the biaxially oriented film. The film thickness of the selective reflection layer was 5 μm.

In addition, the above-mentioned cyclohexanone solution 2 was applied to the above-mentioned selective reflection layer by a bar coater. Subsequently, after retaining at a temperature of 120°C for two minutes, cyclohexanone in the cyclohexanone solution was vaporized to orient the liquid crystalline monomer molecule. Then, the obtained coating film was irradiated with ultraviolet rays at 400 mJ/cm$^2$ to three-dimensionally crosslink and polymerize acrylate of the liquid crystalline monomer molecule oriented by a radical generated from the photopolymerization initiator in the coating film and acrylate of the chiral agent, and then form a selective reflection layer and obtain an infrared-ray reflective member having the two selective reflection layers by fixing a cholesteric structure. The film thickness of the second selective reflection layer was 5 μm.

[Example 4]

A biaxially oriented film made of polyethylene terephthalate was prepared as a transparent substrate. First, a cyclohexanone solution, in which 96.95 parts of a liquid crystalline monomer molecule (Paliocolor (registered trademark) LC1057 (manufactured by BASF Corporation)) having polymerizable acrylate at both ends and a spacer between mesogene in the central portion and the above-mentioned acrylate, and 3.05 parts of a chiral agent (Paliocolor (registered trademark) LC756 (manufactured by BASF Corporation)) having polymerizable acrylate at both ends were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight). This was regarded as a cyclohexanone solution 1.

Next, a cyclohexanone solution, in which 97.55 parts of a liquid crystalline monomer molecule (Paliocolor (registered trademark) LC1057 (manufactured by BASF Corporation)) having polymerizable acrylate at both ends and a spacer between mesogene in the central portion and the above-mentioned acrylate, and 2.45 parts of a chiral agent (Paliocolor (registered trademark) LC756 (manufactured by BASF Corporation)) having polymerizable acrylate at both ends were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight). This was regarded as a cyclohexanone solution 2.

Next, a cyclohexanone solution, in which 95.65 parts of a liquid crystalline monomer molecule (Paliocolor (registered trademark) LC1057 (manufactured by BASF Corporation)) having polymerizable acrylate at both ends and a spacer between mesogene in the central portion and the above-mentioned acrylate, and 4.35 parts of a chiral agent (CNL-716™ (manufactured by ADEKA CORPORATION)) having polymerizable acrylate were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight) . This was regarded as a cyclohexanone solution 3.

Lastly, a cyclohexanone solution, in which 96.65 parts of a liquid crystalline monomer molecule (Paliocolor

(registered trademark) LC1057 (manufactured by BASF Corporation)) having polymerizable acrylate at both ends and a spacer between mesogene in the central portion and the above-mentioned acrylate, and 3.35 parts of a chiral agent (CNL-716 (manufactured by ADEKA CORPORATION)) having polymerizable acrylate were dissolved, was prepared. A photopolymerization initiator (Irgacure 184™) of 5.0% by weight with respect to the above-mentioned liquid crystalline monomer molecule was added to the above-mentioned cyclohexanone solution (a solid content of 30% by weight) . This was regarded as a cyclohexanone solution 4.

Next, the above-mentioned cyclohexanone solution 1 was applied to the above-mentioned biaxially oriented film by a bar coater without an oriented film. Subsequently, after retaining at a temperature of 120°C for two minutes, cyclohexanone in the cyclohexanone solution was vaporized to orient the liquid crystalline monomer molecule. Then, the obtained coating film was irradiated with ultraviolet rays at 400 mJ/cm$^2$ to three-dimensionally crosslink and polymerize acrylate of the liquid crystalline monomer molecule oriented by a radical generated from the photopolymerization initiator in the coating film and acrylate of the chiral agent, and then form a selective reflection layer and obtain an infrared-ray reflective member by fixing a cholesteric structure on the biaxially oriented film. The film thickness of the selective reflection layer was 5 μm. Thereafter, the cyclohexanone solutions 2 to 4 were sequentially applied on the same conditions to obtain an infrared-ray reflective member having the four selective reflection layers. The film thickness of each of the selective reflection layers was 5 μm.

[Evaluation]

The reflection properties of the infrared-ray reflective members obtained in Examples 1 to 4 were measured (measured at a regular reflection angle of 5°) by using a spectrophotometer (UV-3100PC™ manufactured by Shimadzu Corporation). The results are shown in TABLE 1 and FIGS. 11 to 14.

[TABLE 1]

| | EXAMPLE 1 | EXAMPLE 2 | EXAMPLE 3 | EXAMPLE 4 |
|---|---|---|---|---|
| $R_1$ (nm) | 1012 | 1010 | 1018 | 1035 |
| REFLECTANCE OF $R_1$ (%) | 47.1 | 78.8 | 46. 7 | 90.8 |
| $R_2$ (nm) | - | - | 1232 | 1257 |
| REFLECTANCE OF $R_2$ (%) | - | - | 40 | 73 |
| $\lambda_1$ (nm) | 920 | 918 | 960 | 935 |
| $\lambda_2$ (nm) | 1086 | 1095 | 1142 | 1125 |
| $\lambda_3$ (nm) | - | - | 1142 | 1176 |
| $\lambda_4$ (nm) | - | - | 1371 | 1388 |

As shown in FIG. 11, in Example 1, it was confirmed that the infrared-ray reflective layer (the right-circularly-polarized-light selective reflective layer) had the first reflection band corresponding to the first radiant energy band of the spectrum of sunlight. Also, as shown in FIG. 12, in Example 2, it was confirmed that the infrared-ray reflective layers (the right-circularly-polarized-light selective reflective layer and the left-circularly-polarized-light selective reflective layer) had the first reflection band. In particular, in Example 2, the infrared-ray reflective layers had both the right-circularly-polarized-light selective reflective layer and the left-circularly-polarized-light selective reflective layer, so that the reflectance of Example 2 was greatly higher than that of Example 1.

Meanwhile, as shown in FIG. 13, in Example 3, it was confirmed that the infrared-ray reflective layers (two kinds of the right-circularly-polarized-light selective reflective layers) had the first reflection band and the second reflection band. Also, as shown in FIG. 14, in Example 4, it was confirmed that the infrared-ray reflective layers (two kinds of the right-circularly-polarized-light selective reflective layers and two kinds of the left-circularly-polarized-light selective reflective layers) had the first reflection band and the second reflection band. In particular, in Example 4, the infrared-ray reflective layers had both the right-circularly-polarized-light selective reflective layers and the left-circularly-polarized-light selective reflective layers, so that the reflectance of Example 4 was greatly higher than that of Example 3.

Reference Signs List

1 transparent substrate
2 selective reflection layer
3 infrared-ray reflective layer
10 infrared-ray reflective member
11 infrared rays
21 first radiant energy band
22 second radiant energy band
23 third radiant energy band
31 first reflection band
32 second reflection band
33 third reflection band
A, C right-circularly-polarized-light selective reflective layer
B left-circularly-polarized-light selective reflective layer
D $\lambda/2$ plate

## Claims

1. An infrared-ray reflective member (10) for transmitting a visible light ray and reflecting an infrared ray having a particular wavelength, comprising:

   an infrared-ray reflective layer (3) having a selective reflection layer (2) for reflecting an infrared ray of a right-circularly polarized light component or a left-circularly polarized light component and for transmitting the other component, and a transparent substrate (1)
   **characterized in that** the infrared-ray reflective layer (3) has a first reflection band corresponding to a first radiant energy band containing a peak located closest to a short-wavelength side of an infrared range of a spectrum of sunlight on earth,
   when a maximum reflectance in the first reflection band is determined at $R_1$ and a wavelength in a short-wavelength side for allowing half-value reflectance of the $R_1$ is determined at $\lambda_1$, the $\lambda_1$ is 900 nm to 1010 nm, and when a wavelength in a long-wavelength side for allowing half-value reflectance of the $R_1$ in the first reflection band is determined at $\lambda_2$, the $\lambda_2$ is 1090 nm to 1210 nm.

2. The infrared-ray reflective member (10) according to Claim 1, **characterized in that** the $\lambda_1$ is 910 nm to 970 nm.

3. The infrared-ray reflective member (10) according to Claim 1 or 2, **characterized in that** the infrared-ray reflective layer (3) is a right--circularly-polarized-light selective reflection layer A corresponding to the first reflection band.

4. The infrared-ray reflective member (10) according to Claim 1 or 2, **characterized in that** the infrared-ray reflective layer (3) has a right-circularly-polarized-light selective reflection layer A and a left-circularly-polarized-light selective reflection layer B corresponding to the first reflection band.

5. The infrared-ray reflective member (10) according to Claim 4, **characterized in that** the left-circularly-polarized-light selective reflection layer B is composed of a right-circularly-polarized-light selective reflection layer C for reflecting the infrared ray of the right-circularly polarized light component and a $\lambda/2$ plate D formed on a light-receiving side surface of the right-circularly-polarized-light selective reflection layer C.

6. The infrared-ray reflective member (10) according to Claim 1 or 2, **characterized in that** the infrared-ray reflective layer (3) has a second reflection band corresponding to a second radiant energy band containing a peak located second closest to the short-wavelength side of the infrared range of the spectrum of sunlight on earth; and when a maximum reflectance in the second reflection band is determined at $R_2$ and a wavelength in a long-wavelength side for allowing half-value reflectance of the $R_2$ is determined at $\lambda_4$, the $\lambda_4$ is 1250 nm to 1450 nm.

7. The infrared-ray reflective member (10) according to Claim 6, **characterized in that** the infrared-ray reflective layer (3) has a right-circularly-polarized-light selective reflection layer $A_1$ corresponding to the first reflection band and a right-circularly-polarized-light selective reflection layer $A_2$ corresponding to the second reflection band.

8. The infrared-ray reflective member (10) according to Claim 6, **characterized in that** the infrared-ray reflective layer (3) has a right-circularly-polarized-light selective reflection layer $A_1$ and a left-circularly-polarized-light selective

reflection layer $B_1$ corresponding to the first reflection band, and a right-circularly-polarized-light selective reflection layer $A_2$ and a left-circularly-polarized-light selective reflection layer $B_2$ corresponding to the second reflection band.

9. The infrared-ray reflective member (10) according to Claim 8, **characterized in that** at least one of the left-circularly-polarized-light selective reflection layer $B_1$ and the left-circularly-polarized-light selective reflection layer $B_2$ is composed of a right-circularly-polarized-light selective reflection layer C for reflecting the infrared ray of the right-circularly polarized light component and a $\lambda/2$ plate $D_1$ or $D_2$ formed on a light-receiving side surface of the right-circularly-polarized-light selective reflection layer C.

10. The infrared-ray reflective member (10) according to any one of Claims 1 to 9, **characterized in that** the selective reflection layer (2) contains a rodlike compound with a cholesteric structure formed.

11. The infrared-ray reflective member (10) according to Claim 10, **characterized in that** the rodlike compound has nematic liquid crystallinity; and the selective reflection layer (2) contains a fixed chiral nematic liquid crystal.

## Patentansprüche

1. Infrarotstrahlreflexionselement (10) zum Durchlassen eines sichtbaren Lichtstrahls und zum Reflektieren eines Infrarotstrahls mit einer bestimmten Wellenlänge, umfassend:

   eine Infrarotstrahlreflexionsschicht (3) mit einer selektiven Reflexionsschicht (2) zum Reflektieren eines Infrarotstrahls einer rechtszirkular polarisierten Lichtkomponente oder einer linkszirkular polarisierten Lichtkomponente und zum Durchlassen der anderen Komponente und einem transparenten Substrat (1) **dadurch gekennzeichnet, dass**
   die Infrarotstrahlreflexionsschicht (3) ein erstes Reflexionsband aufweist, das einem ersten Strahlungsenergieband entspricht, das einen Peak enthält, der einer kurzwelligen Seite eines Infrarotbereichs eines Spektrums von Sonnenlicht auf der Erde am nächsten liegt,
   wenn ein maximales Reflexionsvermögen im ersten Reflexionsband bei $R_1$ bestimmt wird und eine Wellenlänge auf einer kurzwelligen Seite zum Ermöglichen eines Halbwertreflexionsvermögens des $R_1$ bei $\lambda_1$ bestimmt wird, $\lambda_1$ 900 nm bis 1010 nm beträgt, und
   wenn eine Wellenlänge auf einer langwelligen Seite zum Ermöglichen eines Halbwertreflexionsvermögens des $R_1$ im ersten Reflexionsband bei $\lambda_2$ bestimmt wird, $\lambda_2$ 1090 nm bis 1210 nm beträgt.

2. Infrarotstrahlreflexionselement (10) nach Anspruch 1, **dadurch gekennzeichnet, dass** $\lambda_1$ 910 nm bis 970 nm beträgt.

3. Infrarotstrahlreflexionselement (10) nach Anspruch 1 oder 2, **dadurch gekennzeichnet, dass** die Infrarotstrahlreflexionsschicht (3) eine rechtszirkular-polarisiertes Licht selektive Reflexionsschicht A ist, die dem ersten Reflexionsband entspricht.

4. Infrarotstrahlreflexionselement (10) nach Anspruch 1 oder 2, **dadurch gekennzeichnet, dass** die Infrarotstrahlreflexionsschicht (3) eine rechtszirkular-polarisiertes Licht selektive Reflexionsschicht A und eine linkszirkular-polarisiertes Licht selektive Reflexionsschicht B aufweist, die dem ersten Reflexionsband entsprechen.

5. Infrarotstrahlreflexionselement (10) nach Anspruch 4, **dadurch gekennzeichnet, dass** die linkszirkular-polarisiertes Licht selektive Reflexionsschicht B aus einer rechtszirkular-polarisiertes Licht selektiven Reflexionsschicht C zum Reflektieren des Infrarotstrahls der rechtszirkular polarisierten Lichtkomponente und einer auf einer lichtempfangenden Seitenfläche der rechtszirkular-polarisiertes Licht selektiven Reflexionsschicht C gebildeten $\lambda/2$-Platte D besteht.

6. Infrarotstrahlreflexionselement (10) nach Anspruch 1 oder 2, **dadurch gekennzeichnet, dass** die Infrarotstrahlreflexionsschicht (3) ein zweites Reflexionsband aufweist, das einem zweiten Strahlungsenergieband entspricht, das einen Peak enthält, der einer kurzwelligen Seite des Infrarotbereichs des Sonnenlichtspektrums auf der Erde am zweitnächsten liegt; und
   wenn ein maximales Reflexionsvermögen im zweiten Reflexionsband bei $R_2$ bestimmt wird und eine Wellenlänge auf einer langwelligen Seite zum Ermöglichen eines Halbwertreflexionsvermögens des $R_2$ bei $\lambda_4$ bestimmt wird, $\lambda_4$ 1250 nm bis 1450 nm beträgt.

**7.** Infrarotstrahlreflexionselement (10) nach Anspruch 6, **dadurch gekennzeichnet, dass** die Infrarotstrahlreflexionsschicht (3) eine dem ersten Reflexionsband entsprechende rechtszirkular-polarisiertes Licht selektive Reflexionsschicht $A_1$ und eine dem zweiten Reflexionsband entsprechende rechtszirkular-polarisiertes Licht selektive Reflexionsschicht $A_2$ aufweist.

**8.** Infrarotstrahlreflexionselement (10) nach Anspruch 6, **dadurch gekennzeichnet, dass** die Infrarotstrahlreflexionsschicht (3) eine rechtszirkular-polarisiertes Licht selektive Reflexionsschicht $A_1$ und eine linkszirkular-polarisiertes Licht selektive Reflexionsschicht $B_1$ aufweist, die dem ersten Reflexionsband entsprechen, und eine rechtszirkular-polarisiertes Licht selektive Reflexionsschicht $A_2$ und eine linkszirkular-polarisiertes Licht selektive Reflexionsschicht $B_2$, die dem zweiten Reflexionsband entsprechen.

**9.** Infrarotstrahlreflexionselement (10) nach Anspruch 8, **dadurch gekennzeichnet, dass** mindestens eine der linkszirkular-polarisiertes Licht selektiven Reflexionsschichten $B_1$ und der linkszirkular-polarisiertes Licht selektiven Reflexionsschicht $B_2$ aus einer rechtszirkular-polarisiertes Licht selektiven Reflexionsschicht C zum Reflektieren des Infrarotstrahls der rechtszirkular polarisierten Lichtkomponente und einer auf einer lichtempfangenden Seitenfläche der rechtszirkular-polarisiertes Licht selektiven Reflexionsschicht C gebildeten $\lambda/2$-Platte $D_1$ oder $D_2$ besteht.

**10.** Infrarotstrahlreflexionselement (10) nach einem der Ansprüche 1 bis 9, **dadurch gekennzeichnet, dass** die selektive Reflexionsschicht (2) eine stabförmige Verbindung mit einer gebildeten cholesterischen Struktur enthält.

**11.** Infrarotstrahlreflexionselement (10) nach Anspruch 10, **dadurch gekennzeichnet, dass** die stabförmige Verbindung eine nematische Flüssigkristallinität aufweist; und die selektive Reflexionsschicht (2) einen festen chiralen nematischen Flüssigkristall enthält.

## Revendications

**1.** Élément réfléchissant les rayons infrarouges (10) pour transmettre un rayon de lumière visible et réfléchissant les rayons infrarouges ayant une longueur d'onde particulière, comprenant :

une couche réfléchissant les rayons infrarouges (3) ayant une couche de réflexion sélective (2) pour réfléchir les rayons infrarouges d'une composante de lumière polarisée circulairement à droite ou d'une composante de lumière polarisée circulairement à gauche et pour transmettre l'autre composante, et un substrat transparent (1)
**caractérisé en ce que**
la couche réfléchissant les rayons infrarouges (3) a une première bande de réflexion correspondant à une première bande d'énergie rayonnante contenant un pic situé le plus près d'un côté à courte longueur d'onde d'une plage infrarouge d'un spectre de lumière solaire sur terre, et
lorsqu'une réflectance maximale dans la première bande de réflexion est déterminée à $R_1$ et une longueur d'onde dans un côté à courte longueur d'onde pour permettre une réflectance à demi-valeur de $R_1$ est déterminée à $\lambda_1$, $\lambda_1$ est de 900 nm à 1 010 nm, et
lorsqu'une une longueur d'onde dans un côté à grande longueur d'onde pour permettre une réflectance à demi-valeur de $R_1$ dans la première bande de réflexion est déterminée à $\lambda_2$, $\lambda_2$ est de 1 090 nm à 1 210 nm.

**2.** Élément réfléchissant les rayons infrarouges (10) selon la revendication 1,

**caractérisé en ce que** $\lambda_1$ est de 910 nm à 970 nm.

**3.** Élément réfléchissant les rayons infrarouges (10) selon la revendication 1 ou 2, **caractérisé en ce que** la couche réfléchissant les rayons infrarouges (3) est une couche de réflexion sélective de lumière polarisée circulairement à droite A correspondant à la première bande de réflexion.

**4.** Élément réfléchissant les rayons infrarouges (10) selon la revendication 1 ou 2, **caractérisé en ce que** la couche réfléchissant les rayons infrarouges (3) a une couche de réflexion sélective de lumière polarisée circulairement à droite A et une couche de réflexion sélective de lumière polarisée circulairement à gauche B correspondant à la première bande de réflexion.

**5.** Élément réfléchissant les rayons infrarouges (10) selon la revendication 4, **caractérisé en ce que** la couche de réflexion sélective de lumière polarisée circulairement à gauche B est composée d'une couche de réflexion sélective de lumière polarisée circulairement à droite C pour réfléchir les rayons infrarouges de la composante de lumière polarisée circulairement à droite et d'une plaque $\lambda/2$ D formée sur une surface latérale réceptrice de lumière de la couche de réflexion sélective de lumière polarisée circulairement à droite C.

**6.** Élément réfléchissant les rayons infrarouges (10) selon la revendication 1 ou 2, **caractérisé en ce que** la couche réfléchissant les rayons infrarouges (3) a une seconde bande de réflexion correspondant à une seconde bande d'énergie rayonnante contenant un pic situé en seconde position le plus près du côté à courte longueur d'onde de la plage infrarouge du spectre de lumière solaire sur terre ; et
lorsqu'une réflectance maximale dans la seconde bande de réflexion est déterminée à $R_2$ et une longueur d'onde dans un côté à grande longueur d'onde pour permettre une réflectance à demi-valeur de $R_2$ est déterminée à $\lambda_4$, $\lambda_4$ est de 1 250 nm à 1 450 nm.

**7.** Élément réfléchissant les rayons infrarouges (10) selon la revendication 6, **caractérisé en ce que** la couche réfléchissant les rayons infrarouges (3) a une couche de réflexion sélective de lumière polarisée circulairement à droite $A_1$ correspondant à la première bande de réflexion et une couche de réflexion sélective de lumière polarisée circulairement à droite $A_2$ correspondant à la seconde bande de réflexion.

**8.** Élément réfléchissant les rayons infrarouges (10) selon la revendication 6, **caractérisé en ce que** la couche réfléchissant les rayons infrarouges (3) a une couche de réflexion sélective de lumière polarisée circulairement à droite $A_1$ et une couche de réflexion sélective de lumière polarisée circulairement à gauche $B_1$ correspondant à la première bande de réflexion et une couche de réflexion sélective de lumière polarisée circulairement à droite $A_2$ et une couche de réflexion sélective de lumière polarisée circulairement à gauche $B_2$ correspondant à la seconde bande de réflexion.

**9.** Élément réfléchissant les rayons infrarouges (10) selon la revendication 8, **caractérisé en ce qu'**au moins l'une de la couche de réflexion sélective de lumière polarisée circulairement à gauche $B_1$ et de la couche de réflexion sélective de lumière polarisée circulairement à gauche $B_2$ est composée d'une couche de réflexion sélective de lumière polarisée circulairement à droite C pour réfléchir les rayons infrarouges de la composante de lumière polarisée circulairement à droite et d'une plaque $\lambda/2$ $D_1$ ou $D_2$ formée sur une surface latérale réceptrice de lumière de la couche de réflexion sélective de lumière polarisée circulairement à droite C.

**10.** Élément réfléchissant les rayons infrarouges (10) selon l'une quelconque des revendications 1 à 9, **caractérisé en ce que** la couche de réflexion sélective (2) contient un composé en forme de tige avec une structure cholestérique formée.

**11.** Élément réfléchissant les rayons infrarouges (10) selon la revendication 10, **caractérisé en ce que** le composé en forme de tige a une cristallinité liquide nématique ; et la couche de réflexion sélective (2) contient un cristal liquide nématique chiral fixe.

FIG. 1

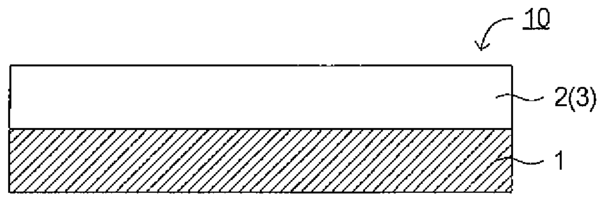


FIG. 2

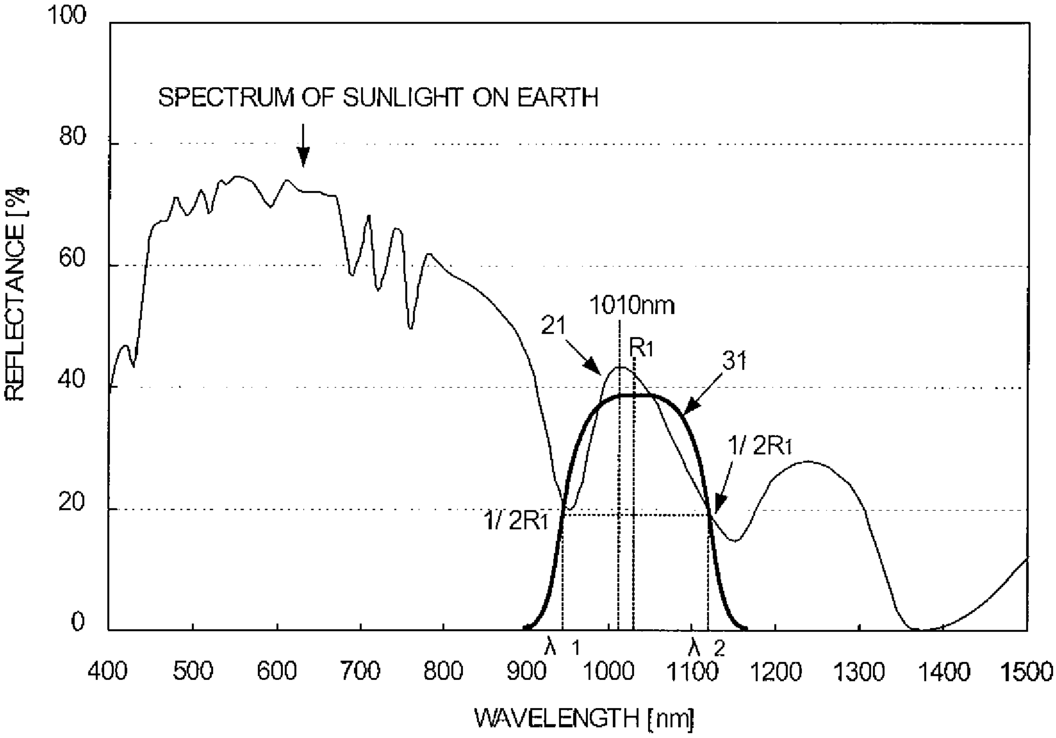


FIG. 3A

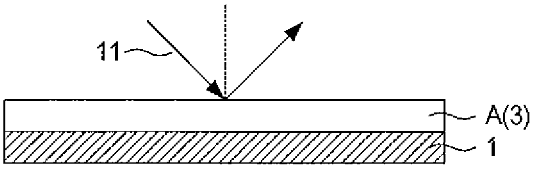


FIG. 3B

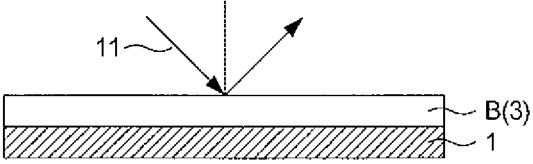

FIG. 4A

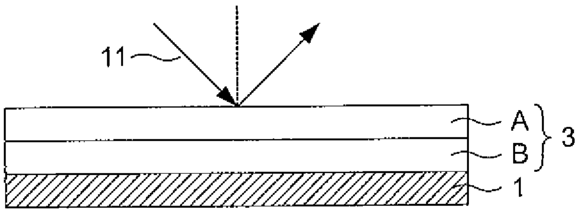


FIG. 4B

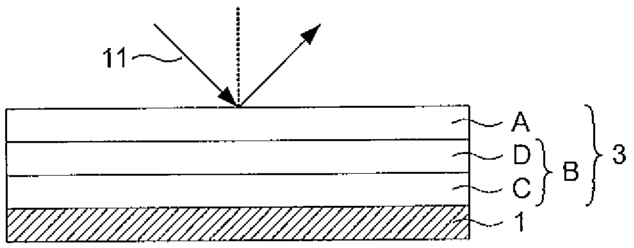


FIG. 5

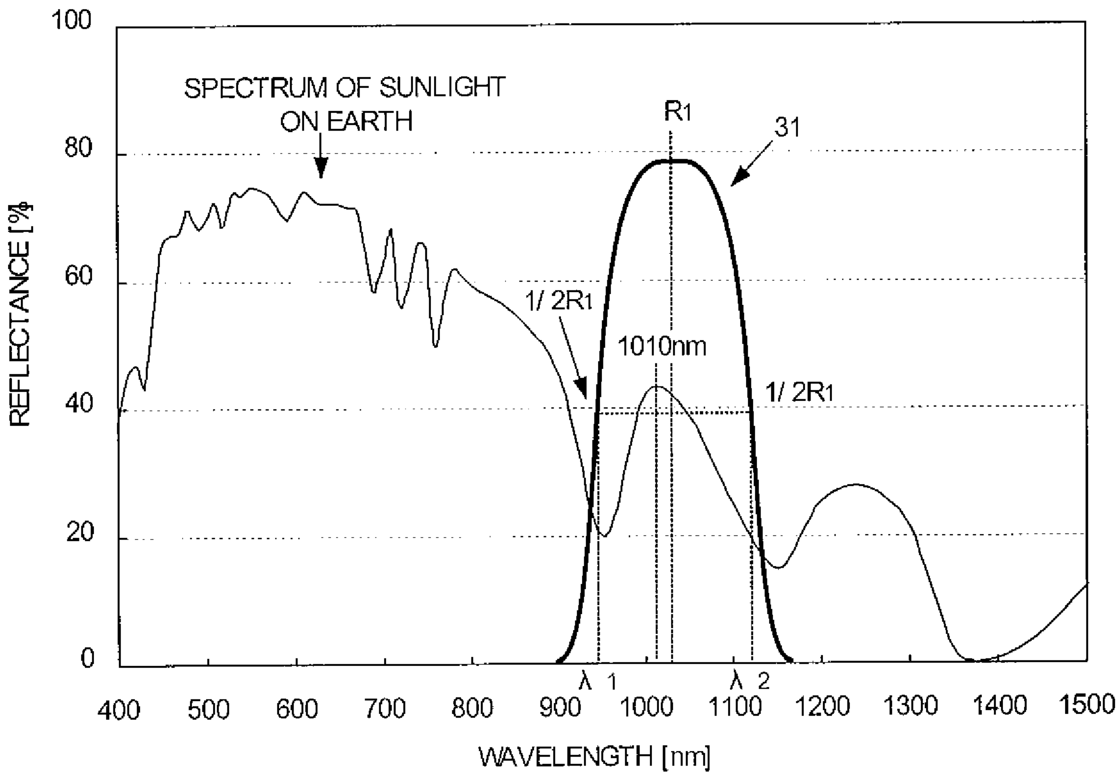

FIG. 6

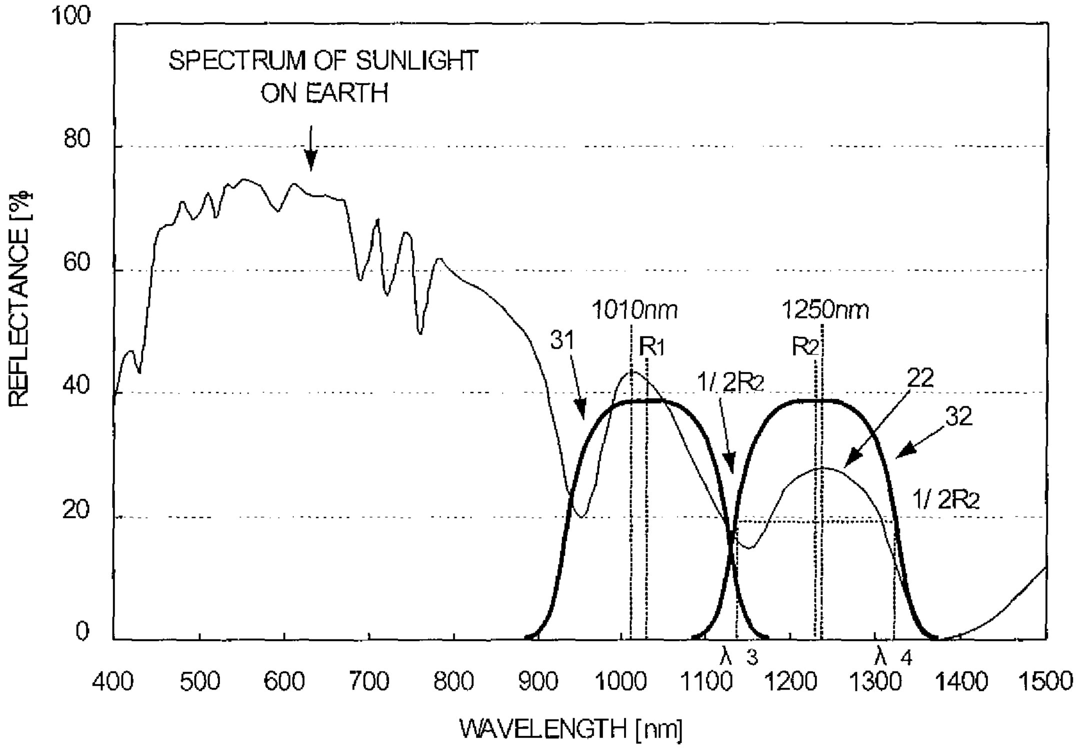


FIG. 7A

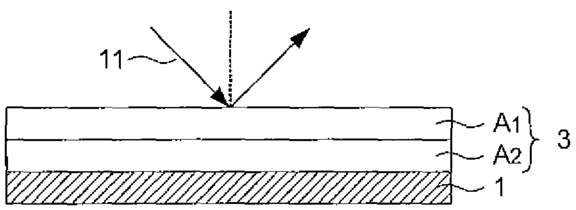


FIG. 7B

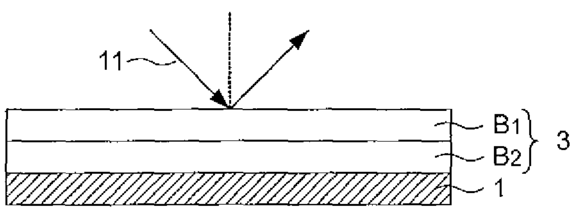

FIG. 8A

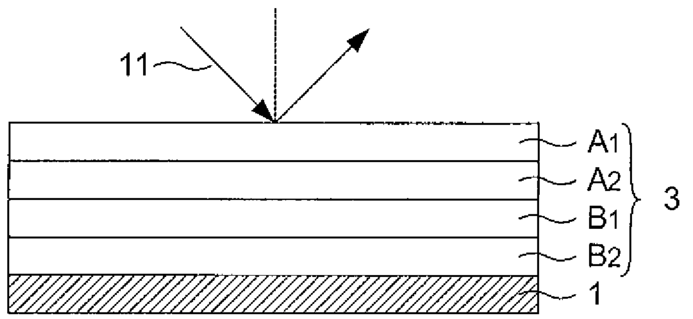


FIG. 8B

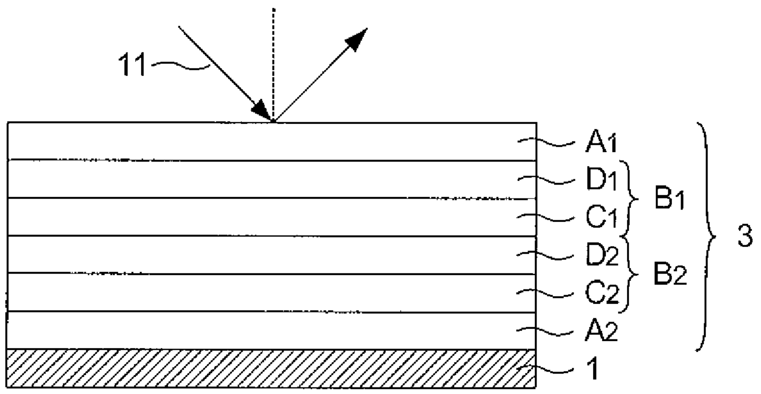


FIG. 8C

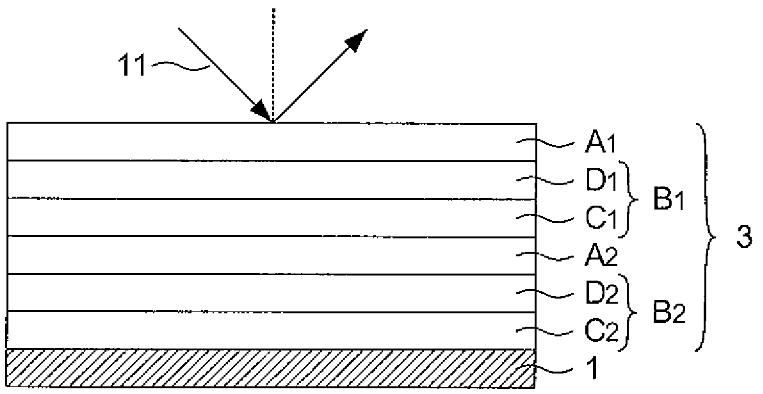


FIG. 8D

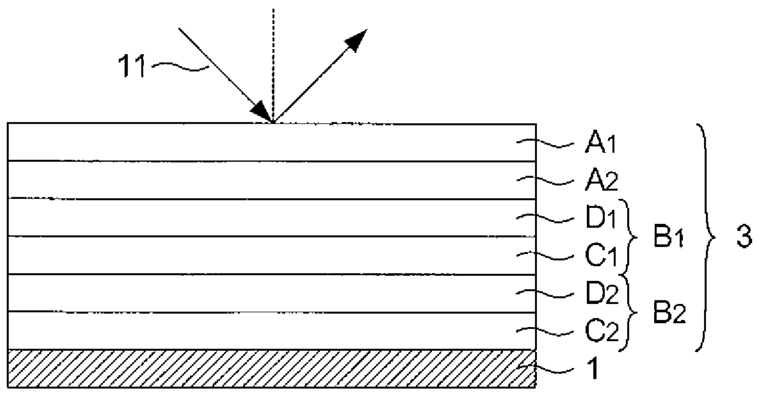

FIG. 9

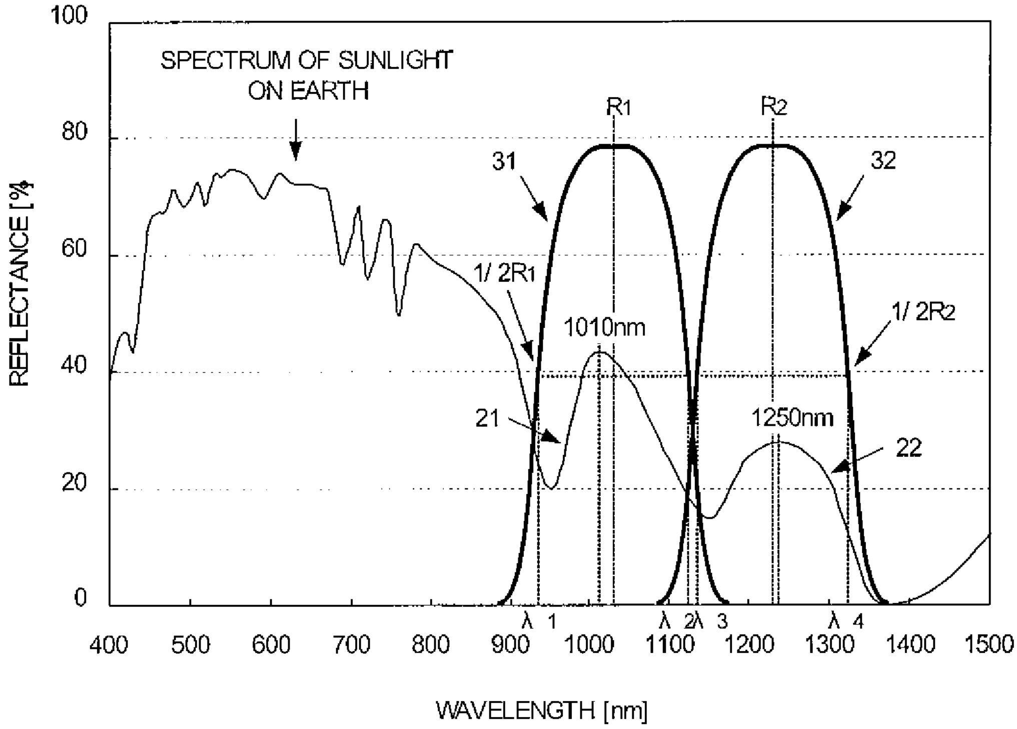
SPECTRUM OF SUNLIGHT
ON EARTH
R1
R2
31
32
1/ 2R1
1/ 2R2
1010nm
1250nm
21
22
REFLECTANCE [%]
100
80
60
40
20
0
λ 1
λ 2
λ 3
λ 4
400 500 600 700 800 900 1000 1100 1200 1300 1400 1500
WAVELENGTH [nm]

FIG. 10

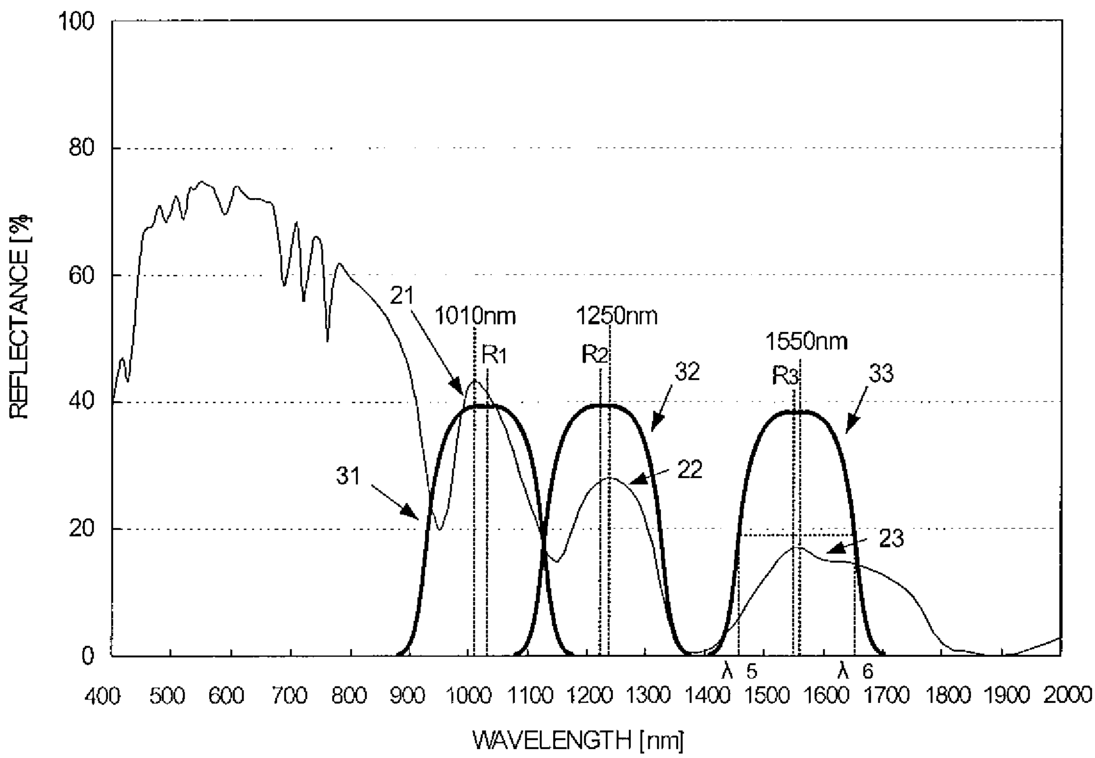
REFLECTANCE [%]
100
80
60
40
20
0
21
1010nm
R1
1250nm
R2
1550nm
R3
32
33
31
22
23
λ 5
λ 6
400 500 600 700 800 900 1000 1100 1200 1300 1400 1500 1600 1700 1800 1900 2000
WAVELENGTH [nm]

FIG. 11

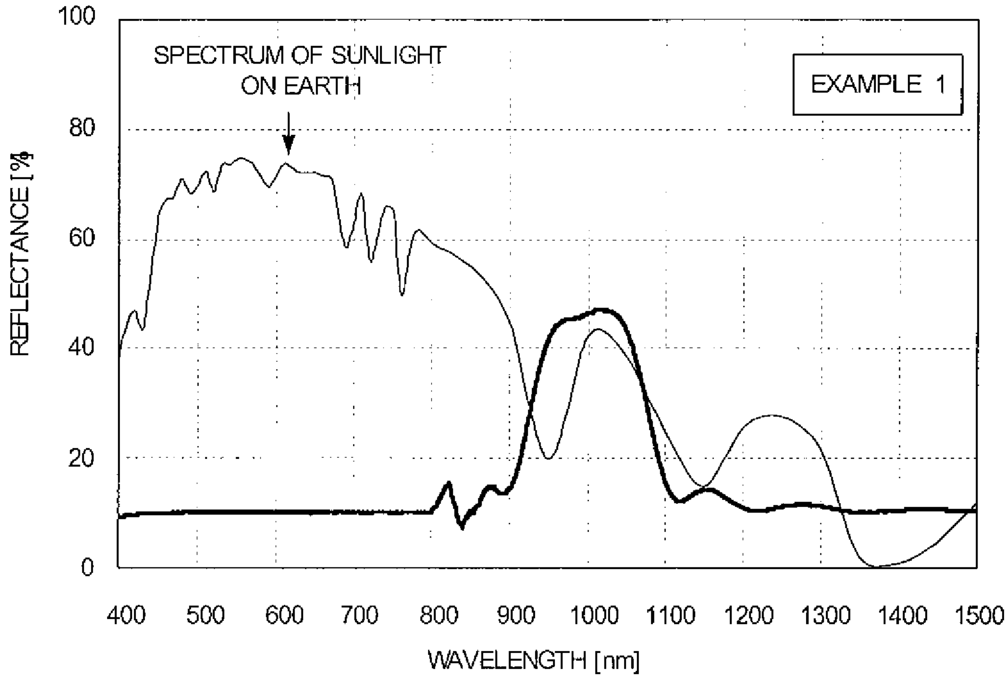
100
80
60
40
20
0
REFLECTANCE [%]
SPECTRUM OF SUNLIGHT
ON EARTH
EXAMPLE 1
400
500
600
700
800
900
1000
1100
1200
1300
1400
1500
WAVELENGTH [nm]

FIG. 12

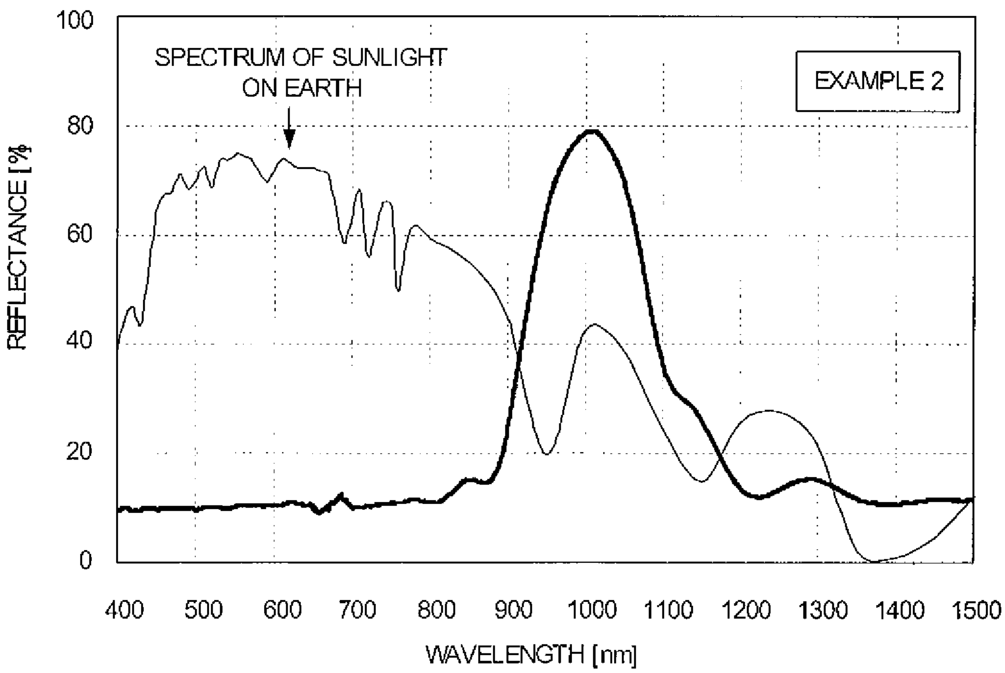
100
80
60
40
20
0
REFLECTANCE [%]
SPECTRUM OF SUNLIGHT
ON EARTH
EXAMPLE 2
400
500
600
700
800
900
1000
1100
1200
1300
1400
1500
WAVELENGTH [nm]

FIG. 13

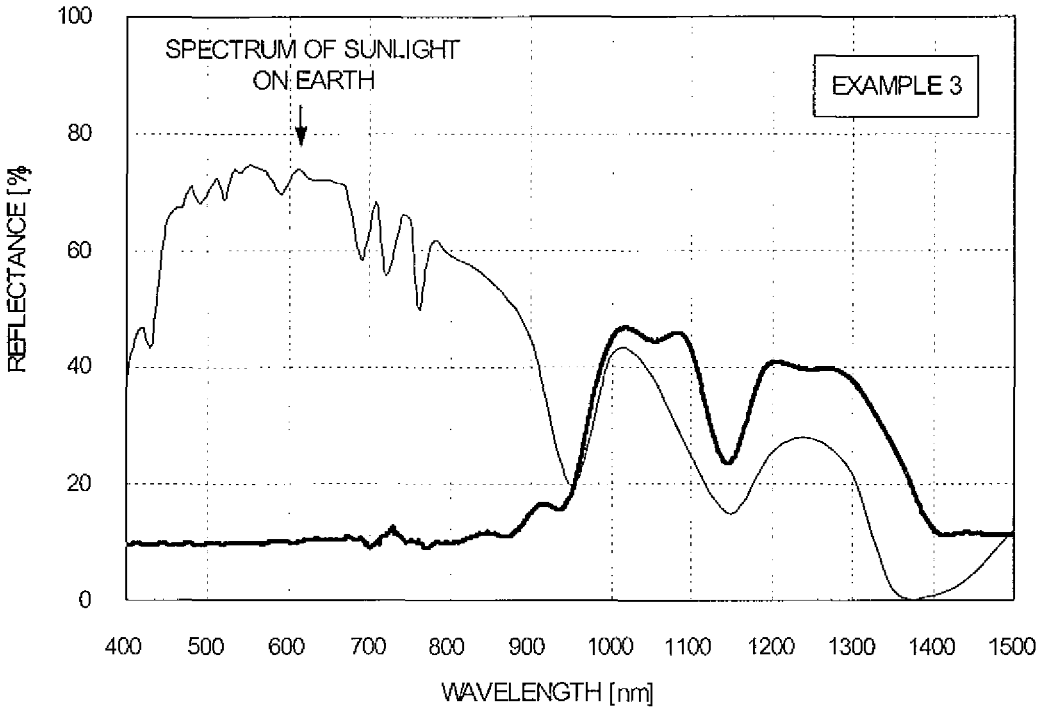
100
80
60
40
20
0
REFLECTANCE [%]
SPECTRUM OF SUNLIGHT
ON EARTH
EXAMPLE 3
400 500 600 700 800 900 1000 1100 1200 1300 1400 1500
WAVELENGTH [nm]

FIG. 14

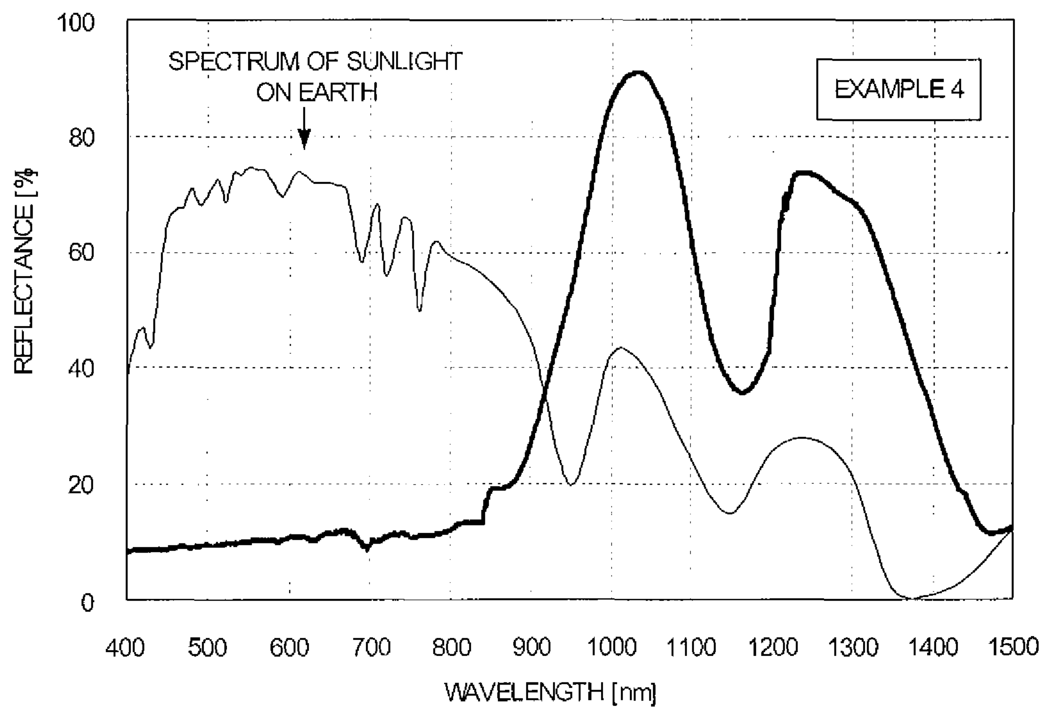
100
80
60
40
20
0
REFLECTANCE [%]
SPECTRUM OF SUNLIGHT
ON EARTH
EXAMPLE 4
400 500 600 700 800 900 1000 1100 1200 1300 1400 1500
WAVELENGTH [nm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H04281403 B
- JP 2001519317 W
- JP 3419568 B
- JP 2008209574 A


### Non-patent literature cited in the description


- **D. J. BROER et al.** *Makromol. Chem.,* 1989, vol. 190, 3201-3215
- **D. J. BROER et al.** *Makromol. Chem.,* 1989, vol. 190, 2255-2268